# EUROPEAN PATENT SPECIFICATION

(11) **EP 4 460 127 B1**
(45) Date of publication and mention of the grant of the patent: **02.12.2026**
(21) Application number: 22914831.7
(22) Date of filing: 27.12.2022
(51) Int. Cl.: H04W 72/04, H04W 72/0446, H04W 72/12, H04W 74/04, H04W 84/12, H04W 72/23, H04W 72/56, H04W 72/566

(54) **WIRELESS RESOURCE SCHEDULING METHOD AND APPARATUS, AND STORAGE MEDIUM**
VERFAHREN UND VORRICHTUNG ZUR PLANUNG VON DRAHTLOSEN RESSOURCEN UND SPEICHERMEDIUM
PROCÉDÉ ET APPAREIL D'ORDONNANCEMENT DE RESSOURCES SANS FIL ET SUPPORT DE STOCKAGE

(30) Priority: 27.12.2021 CN 202111617276; 15.12.2022 CN 202211615278
(43) Date of publication of application: 06.11.2024
(73) Proprietor: Ruijie Networks Co., Ltd., Fuzhou, Fujian 350002 (CN)
(72) Inventor: YU, Chenglong, Fuzhou, Fujian 350002 (CN); MAO, Kaibin, Fuzhou, Fujian 350002 (CN); ZHOU, Zhaoxian, Fuzhou, Fujian 350002 (CN); LIU, Zhongdong, Fuzhou, Fujian 350002 (CN)
(74) Representative: Boult Wade Tennant LLP
(86) International application number: PCT/CN2022/142527
(87) International publication number: WO 2023/125579

(56) References cited:
- WO-A1-2018/107370
- CN-A- 101 159 648
- CN-A- 106 792 723
- CN-A- 113 316 230
- US-A1- 2015 341 130
- US-A1- 2016 029 357
- US-A1- 2016 056 929
- US-A1- 2017 079 033
- US-A1- 2017 079 033

## Description

### CROSS-REFERENCE TO RELATED APPLICATIONS

This application claims priority to Chinese Patent Application No. 202111617276.0, filed with the China National Intellectual Property Administration on December 27, 2021 and entitled "WIRELESS RESOURCE SCHEDULING METHOD, APPARATUS, AND STORAGE MEDIUM".

This application claims priority to Chinese Patent Application No. 202211615278.0, filed with the China National Intellectual Property Administration on December 15, 2022 and entitled "WIRELESS RESOURCE SCHEDULING METHOD, APPARATUS, AND STORAGE MEDIUM".

### TECHNICAL FIELD

The present application relates to the field of data communications technologies, and in particular, to a wireless resource scheduling method, an apparatus, and a storage medium.

### BACKGROUND

In a case of long-distance data transmission, there is a long distance between terminals, the terminals cannot detect signals from each other, and an uplink data stream from a terminal to an AP is subject to a severe collision. Consequently, performance is affected. This is known as a problem of "hidden nodes".

To prevent a collision, 802.11 allows a workstation to use a request to send (English: Request To Send, RTS for short) frame and a clear to send (English: Clear To Send, CTS for short) frame to clear a transmission area. The RTS itself has two purposes: to reserve the authorization to use a wireless medium, and to ask another workstation receiving this message to stop speaking. Once a receiver receives an RTS, the receiver responds with a CTS. Like the RTS, the CTS also makes nearby workstations silent. However, there is a collision in sending an RTS packet by a STA itself. Therefore, only a collision frequency can be reduced, but the collision problem is not resolved thoroughly.

In the 802.11 standard, a point coordination function (English: Point Coordination Function, PCF for short) is another mode for accessing a wireless medium. The PCF allows an 802.11 network to provide a fair medium access mechanism, and an AP polls whether a terminal supporting the protocol has data to send. Therefore, each terminal can independently occupy channel resources, and no collision occurs in data transmission, thereby resolving the collision problem of hidden nodes in long-distance transmission. However, there are still disadvantages: A transmission time of a node polled to send data cannot be accurately controlled, and uncertainty of the sending time affects transmission of service data, and further makes it impossible for the AP to accurately ensure QoS for the node. In addition, the AP is unable to know which nodes need to send data and which nodes do not need to send data. Therefore, a part of the polling time is unnecessarily allocated to the nodes that do not need to send data, causing a waste of wireless medium resources.

The Publication of WO 2018/107370 A1 describes a point to multi-point channel allocation method. The method, whilst not affecting transmission efficiency, reduces the conflict that occurs when multiple stations occupy the same channel to transmit data.

The Publication of US 2017/079033 A1 describes a transmission resource determining method. In the method, a wireless local area network access point determines transmission resource information of first M transmission timeslots in a schedule window when obtaining a right of using a channel, where the channel is a wireless channel in an unlicensed frequency band, and M is a positive integer; and sends the transmission resource information to a station STA after entering the schedule window.

The Publication of US 2016/056929 A1 describes that a STA monitors and updates information on interference level from nearby APs and their corresponding identification. The STA can get this information by measuring received signal strength of beacon frames sent from nearby APs. The information on the identification can comprise any combination of MAC address, BSSID, Partial BSSID, and color of the nearby APs.

### SUMMARY

Embodiments of the present application provide a wireless resource scheduling method, an apparatus, and a storage medium according to the appended claims, which can reduce interference of hidden nodes, ensure QoS, provide fair medium access, and improve utilization of wireless resources.

The wireless resource scheduling method, apparatus, and storage medium can reduce interference of hidden nodes, ensure QoS, provide fair medium access, and improve utilization of wireless resources.

After the access device obtains the first station state set of the station states in the first time window from the plurality of stations, the access device obtains, in the preset time window, the first timeslot allocation information based on the station states, and the access device broadcasts the first timeslot allocation information to the stations, respectively. Because the first timeslot allocation information includes the timeslot allocation information of the access device for each station for using the wireless resource in the at least one time window, after each station (for example, the first station) obtains the first timeslot allocation information through polling, the station can use the wireless resource to send data in a timeslot allocated to the station. In the timeslot in which the first station sends data, other stations can use the wireless resource to send only a small amount of data or cannot use the wireless resource to send data. Therefore, in this wireless resource scheduling manner, the time for each station to use the wireless resource can be properly scheduled, and communication interference from other stations can be avoided when the first station sends data in the timeslot of the first station.

Other features and advantages of this application will be set forth later in the specification, and in part will be readily apparent from the specification, or may be understood by implementing this application. Objectives and other advantages of this application may be achieved and obtained by using a structure particularly pointed out in the written specification, claims, and accompanying drawings.

### BRIEF DESCRIPTION OF DRAWINGS

The accompanying drawings described herein are intended for better understanding of this application, and constitute a part of this application. Exemplary embodiments and descriptions thereof in this application are intended to interpret this application and do not constitute any improper limitation on this application. In the accompanying drawings:
FIG. 1 is a schematic diagram of a structure of a software system of a time division multiplexing system in this application;
FIG. 2 is a schematic diagram of an operation procedure of a wireless resource scheduling method in this application;
FIG. 3 is a schematic diagram of a signaling procedure of a wireless resource scheduling method in this application;
FIG. 4 is a schematic diagram of a networking topology in this application;
FIG. 5 is a schematic flowchart of a wireless resource scheduling method in this application;
FIG. 6 is a schematic diagram of a throughput test in this application;
FIG. 7 is a schematic diagram of timeslot arrangement information in this application;
FIG. 8 is a schematic diagram of a station silence situation in this application;
FIG. 9 is a schematic diagram of another networking topology in this application;
FIG. 10 is a schematic diagram of timeslot allocation information in this application;
FIG. 11 is a schematic diagram of a first arrangement table in this application;
FIG. 12 is a schematic diagram of a second arrangement table in this application;
FIG. 13 is a schematic diagram of a target arrangement table in this application;
FIG. 14 is a schematic diagram of first timeslot allocation information in this application;
FIG. 15 is another schematic diagram of timeslot allocation information in this application;
FIG. 16 is a schematic diagram of a structure of an access device in this application;
FIG. 17 is a schematic diagram of a structure of a first station implementing a wireless resource scheduling method in this application; and
FIG. 18 is a schematic diagram of a structure of a processing device in this application.

### DESCRIPTION OF EMBODIMENTS

To make the objectives, technical solutions, and advantages of the embodiments of this application clearer, the following clearly and thoroughly describes the technical solutions of this application with reference to the accompanying drawings in the embodiments of this application. Apparently, the described embodiments are some but not all of the embodiments of this application. All other embodiments obtained by a person of ordinary skill in the art based on the embodiments described in this application document without creative efforts shall fall within the protection scope of the technical solutions of this application.

In the specification, claims, and accompanying drawings of this application, the terms "first" and "second" are used to distinguish between different objects, and not intended to describe a specific order. In addition, the terms "include" and any other variant thereof are intended to cover non-exclusive protection. For example, a process, method, system, product, or device that includes a list of steps or units is not limited to the listed steps or units, but optionally includes steps or units not listed, or optionally includes other steps or units inherent to the process, method, product, or device. The term "a plurality of" in this application may mean at least two, for example, two, three, or more. However, the embodiments of this application are not limited thereto.

In addition, the term "and/or" in this specification describes only an association relationship for describing associated objects and represents that three relationships may exist. For example, A and/or B may represent the following three cases: Only A exists, both A and B exist, and only B exists. In addition, unless otherwise specified, the character "/" in this specification usually indicates an "or" relationship between associated objects.

Before a wireless resource scheduling method is described, the following first describes a process of establishing a communication connection between a station and an access device, to facilitate subsequent communication between each station and the access device, for example, to facilitate the access device in broadcasting timeslot allocation information to each station, and to facilitate each station in aperiodically or periodically polling the timeslot allocation information broadcast by the access device.

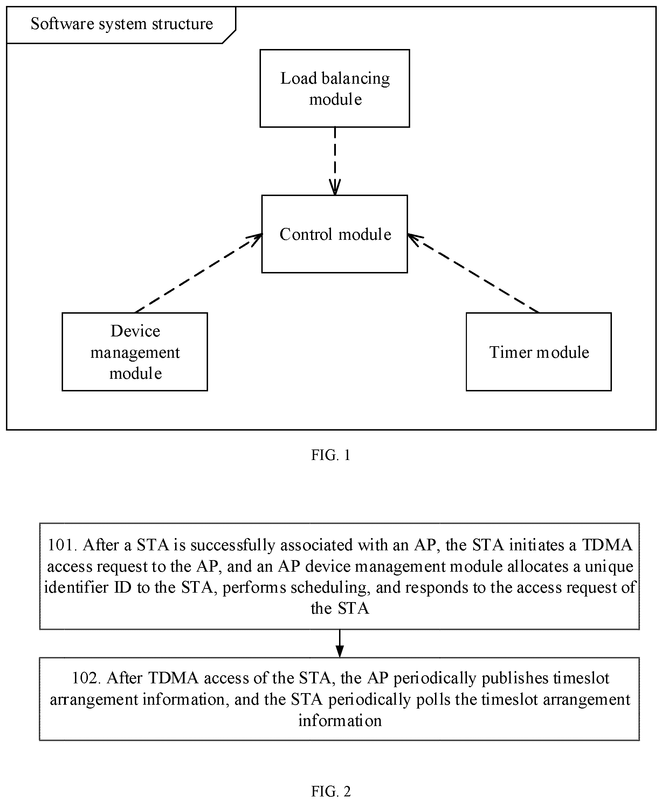

For an operation procedure of the wireless resource scheduling method in this application, refer to FIG. 2. The procedure includes: 101. After a STA is successfully associated with an AP, the STA initiates a TDMA access request to the AP, and an AP device management module allocates a unique identifier ID to the STA, performs scheduling, and responds to the access request of the STA.

After access of the STA succeeds, the STA can participate in TDMA scheduling by using the ID.

102. After TDMA access of the STA, the AP periodically publishes timeslot arrangement information, and the STA periodically polls the timeslot arrangement information.

A normal priority for accessing a wireless medium service by the STA is a lowest priority. When only a current timeslot belongs to the STA, the priority for accessing the wireless medium service is increased by changing an enhanced distributed channel access (English: Enhanced Distributed Channel Access, EDCA for short) parameter.

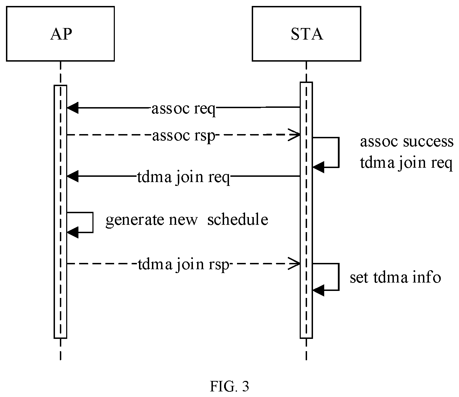

Specifically, for a signaling flowchart for TDMA access by the STA, refer to FIG. 3. In FIG. 3, the STA first sends an access request (assoc req) to the AP to request access to the AP, and the AP returns access success information to the STA in response to the access request of the STA. After successfully accessing the AP, the STA generates a TDMA access request (assoc success tdma join req), and then can initiate the TDMA access request (tdma join req) to the AP. In response to the TDMA access request of the STA, the AP needs to incorporate the STA into a timeslot arrangement. Therefore, the AP needs to generate a piece of new timeslot arrangement information (generate new schedule) and return TDMA access success information to the STA. In addition, the information may include a unique identifier ID allocated by the AP to the STA. After successful TDMA access, the STA can participate in TDMA scheduling (set tdma info) based on the allocated ID.

In some embodiments, after the AP generates the timeslot arrangement information, a manner of updating a reserved timeslot may be used. The manner requires all devices (STAs and the AP) to execute the timeslot arrangement information together in a timeslot (slot time) in the future, so that the devices use a mechanism of broadcast + response + timeout to ensure that the devices achieve synchronization of the timeslot arrangement information.

In the manner of updating the reserved timeslot, after the current timeslot is later than the reserved timeslot, the timeslot arrangement information is not successfully synchronized. In this case, the timeslot arrangement information is invalid due to synchronization failure and timeout, and it is necessary to reconstruct timeslot arrangement information or request the AP to reconstruct timeslot arrangement information.

For example, devices accessing the AP include a STA 1 and a STA 2. Assuming that the AP generates timeslot arrangement information at 12:00 and broadcasts the timeslot arrangement information to the STA 1 and the STA 2, a reserved timeslot in the timeslot arrangement information is updated to 12:30, that is, the STA 1 and the STA 2 need to execute the timeslot arrangement information together at 12:30.

Assuming that the STA 1 receives the timeslot arrangement information at 12: 10, the STA 1 can return information to the AP in response to receiving the timeslot arrangement information; and the STA 2 receives the timeslot arrangement information at 12:40. In this case, the STA 2 needs to return timeout information to the AP, so that the AP can regenerate and broadcast timeslot arrangement information.

In addition, scheduling of the devices needs to be triggered by a local hardware timer. Based on the timeslot arrangement information delivered in a unified manner, a device determines whether the device is authorized in each timeslot, that is, whether the current timeslot belongs to the device, to determine whether to send data in the current timeslot. In addition, based on a high-precision time between devices, scheduling synchronization between devices is performed periodically, so that only one device sends data at each moment.

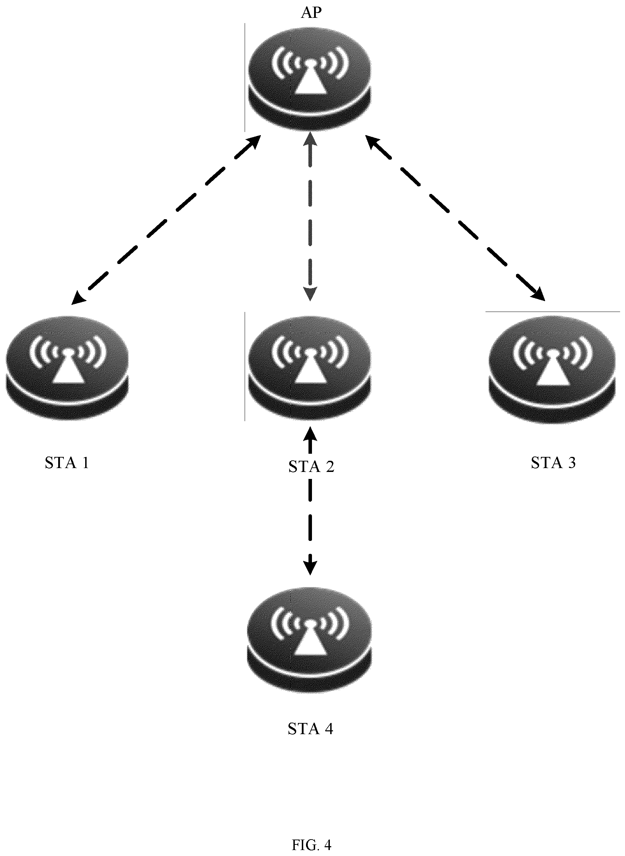

For example, a networking topology of devices may be shown in FIG. 4, where device uids that can be obtained based on FIG. 4 may be shown in the following Table 1.

**Table 1**

| Device | AP | STA 1 | STA 2 | STA 3 | STA 4 |
|---|---|---|---|---|---|
| uid | 0 | 1 | 2 | 3 | 4 |

The timeslot arrangement information generated by the AP may be shown in the following Table 2.

**Table 2**

| | | | | | | |
|---|---|---|---|---|---|---|
| Arrangement | 0 | 1 | 2 | 2 | 3 | 4 |
| Number | 0 | 1 | 2 | 3 | 4 | 5 |

After the STA 1, the STA 2, the STA 3, and the STA 4 receive the timeslot arrangement information, assuming that a current timing synchronization function (TSF) value is 1501554 µs and that a timeslot length is 4 ms (4000 µs), a current timeslot value may be determined as [1501554 ÷ 4000] = 375, and the timeslot value indicates in which timeslot the current TSF value is. Therefore, a rounding operation needs to be performed herein. A number obtained based on the current timeslot value may be 375 mod 6 = 3, that is, the current timeslot is scheduled in an arrangement numbered 3. In this case, based on Table 2, it can be determined that a corresponding uid is 2, that is, a device STA 2. Therefore, in the current timeslot, the STA 2 is authorized to send data, and other devices, that is, the STA 1, the STA 3, and the STA 4, need to keep silent.

In addition, due to differences between devices and between environments, scheduling is not synchronized between devices, resulting in an offset. Therefore, scheduling synchronization further needs to be performed.

Specifically, timeslots with fixed timeslot lengths may be replanned based on a TSF of the AP as a time reference, and then scheduling synchronization may be performed periodically. For example, in a 1024^{th} timeslot, a current TSF value may be obtained, and a modulo operation may be performed in combination with a timeslot length of 4 ms. In an ideal case, a time deviation obtained through calculation is 0, but due to the difference between devices, a time deviation may be obtained. After the time deviation is obtained, a timeout time of next scheduling may be obtained in an ideal case based on the timeslot length minus the time deviation, and the timeout time of the next scheduling may be used to correct scheduling. Based on a next time of scheduling all devices, scheduling synchronization may be performed and the time deviation can be corrected back.

The wireless resource scheduling method provided in this application may be performed by an apparatus provided in this application, or a processing device such as a server device, a physical host, a vehicle-mounted terminal, or user equipment (UE for short) integrating the apparatus, where the apparatus may be implemented by hardware or software, and the UE may be specifically a terminal device such as a smartphone, a tablet computer, a notebook computer, a palmtop computer, a desktop computer, or a personal digital assistant (PDA for short).

An architecture of a time division multiplexing system to which the wireless resource scheduling method provided in this application is applicable may be shown in FIG. 4. The architecture in FIG. 4 includes an AP and a STA 1, a STA2, a STA3, and a STA4. To be specific, in the architecture of the time division multiplexing system, an access device may be the AP, and first stations may be the STA 1, the STA 2, the STA 3, and the STA 4 accessing the AP. The foregoing wireless resource scheduling method may be implemented by using the access device and the first stations, that is, the AP, the STA 1, the STA 2, the STA 3, and the STA 4.

A basic idea of this application is as follows: In view of a problem of hidden nodes, a timeslot allocation mechanism is used to cooperate with switching of wireless medium access priorities, to reduce interference of hidden nodes, ensure QoS, and provide fair medium access, while avoiding a waste of wireless medium resources.

1.The AP allocates working timeslots to different STAs based on a topology and traffic conditions by using a timeslot allocation algorithm, thereby alleviating a collision and ensuring balance between STAs. In addition, a manner of arranging timeslots in advance is used to ensure that a STA can work normally without disorder even when information is lost in a received timeslot.

2. The STA changes, based on a working timeslot, a priority for accessing a wireless medium service. When a scheduled STA has data to transmit, data sending of an unscheduled STA is suppressed and the unscheduled STA keeps silent. When the scheduled STA has no data to transmit, data sending of the unscheduled STA is not suppressed. Therefore, wireless medium resources are not wasted, and real-time performance of a high-priority service is ensured.

The following first describes the wireless resource scheduling method provided in this application.

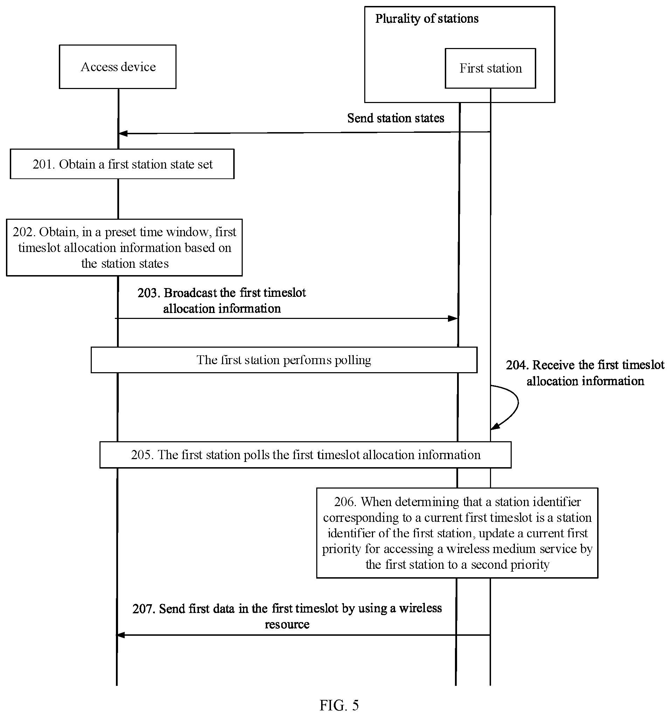

FIG. 5 is a schematic flowchart of a wireless resource scheduling method in this application. The method is applied to wireless resource scheduling in a communications system. The method provided in this application may specifically include the following steps.

201. An access device obtains a first station state set.

The first station state set includes station states of a plurality of stations in a first time window, and the station state of each station may include real-time traffic and a current priority for accessing a wireless medium service.

It may be understood that the access device obtains the station state of each station from the plurality of stations, that is, the access device obtains a station state of a first station from the first station. The first station is any one of the plurality of stations. The same is true for other stations. Details are not described again.

202. The access device obtains, in a preset time window, first timeslot allocation information based on the station states.

The first timeslot allocation information includes timeslot allocation information of the access device for each station for using a wireless resource in at least one time window.

In some implementations, that the access device obtains first timeslot allocation information based on the station states includes:
obtaining a preset mapping relationship, where the preset mapping relationship includes a mapping relationship between a plurality of timeslot parameters, timeslot parameter values corresponding to the plurality of timeslot parameters, and description information of the timeslot parameters; and
generating the first timeslot allocation information based on the preset mapping relationship and the station states.

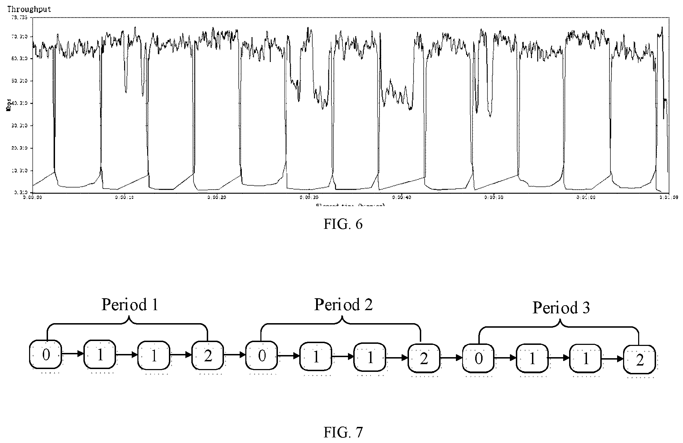

For example, based on STA information of a device management module, an AP periodically generates timeslot arrangement information by using a timeslot allocation algorithm and publishes the information. The timeslot arrangement information is shown in FIG. 7. Information of the timeslot allocation algorithm is shown in the following Table 3.

**Table 3**

| Algorithm parameter | Value | Remark |
|---|---|---|
| Timeslot length | 4 ms | Scheduled available time |
| Timeslot weight | Obtained through calculation by a load balancing module | A high weight for traffic with a high priority |
| Quantity of timeslots | Determined based on a weight and a quantity of interrupts | Quantity of timeslots in a period |
| Quantity of periods | Timeslots are arranged in advance to prevent a packet loss and timeslot arrangement information reception failure | The timeslot arrangement information may include a plurality of periods |
| ... | ... | ... |

It can be learned that by setting the preset mapping relationship, a speed of determining the first timeslot allocation information can be effectively increased, and accuracy of obtaining the first timeslot allocation information can be improved.

In some implementations, the plurality of stations include a first station and a second station, and a priority of the first station is higher than a priority of the second station;
the first timeslot allocation information includes timeslot allocation information for using wireless resources in at least three time windows, the at least three time windows include at least a third time window and a fourth time window, and the fourth time window lags behind the third time window;
a quantity of timeslots occupied by the first station in each time window is larger than a quantity of timeslots occupied by the second station in each time window; and
a time domain position of the first station in the third time window corresponds to a time domain position of the first station in the fourth time window, and a time domain position of the second station in the third time window corresponds to a time domain position of the second station in the fourth time window.

Preferably, the at least three time windows may include a second time window, the third time window, and the fourth time window. There are four time windows in total, including the first time window in the foregoing embodiment. Specifically, in the first time window, each station can send data and report its own information to the access device, that is, the station state (such as real-time traffic). In the second time window, the access device obtains the first timeslot allocation information based on the station state of each station and broadcasts the first timeslot allocation information to the stations, respectively before the second time window ends. The broadcast first timeslot allocation information includes timeslots in the third time window and the fourth time window. To be specific, after receiving the first timeslot allocation information, each station can send data in corresponding timeslots in the third time window and the fourth time window.

FIG. 7 is a schematic diagram of the first timeslot allocation information. For example, the time window is a period. In each period, a scheduling order of wireless resources is 0 -> 1 -> 1 -> 2 for STAs corresponding to IDs, where a STA with an ID 1 has a greater weight than other STAs and occupies two timeslots in one period. A quantity of timeslots is 4 and a quantity of periods is 3. For example, as shown in FIG. 5, #1 in a period 1 corresponds to #1 in a period 2 and a period 3, and time domain positions (such as timeslots) in each period are distributed according to this rule. This indicates distribution of time domain positions of wireless resources used by each station in each repetition period. Because the first station has a high priority, and there are only four time domain positions in a period, the first station needs to occupy at least two time domain positions to reflect a priority advantage of the first station.

203. The access device broadcasts the first timeslot allocation information to the stations, respectively.

It may be understood that, the access device sends the first timeslot allocation information to each station that has established a communication connection to the access device and that is in a normal communication state. These stations perform channel polling periodically or aperiodically to obtain the first timeslot allocation information. In this embodiment of this application, an example in which the first station (the station that has established a communication connection to the access device and that is in a normal communication state) receives the first timeslot allocation information through polling is used, and the same is true for other stations. Details are not described again.

After the AP generates the timeslot arrangement information, the information is sent by broadcast. Based on the timeslot length and the quantity of timeslots, it can be known that the timeslot arrangement information is generated and published again after 4 ms * 4 = 16 ms.

204. The first station receives the first timeslot allocation information from the access device.

The first timeslot allocation information includes timeslot allocation information of the access device for each station for using a wireless resource in at least one time window.

After TDMA access of the STA, the AP periodically publishes the timeslot arrangement information, and the STA periodically polls the timeslot arrangement information. A normal priority for accessing the wireless medium service by the STA is a lowest priority. When only a current timeslot belongs to the STA, the priority for accessing the wireless medium service is increased by changing an EDCA parameter.

A low-priority device has far fewer opportunities to obtain a wireless medium resource than a high-priority device, even cannot obtain a wireless medium resource, and is completely suppressed and in a silent state. FIG. 6 shows an IxChariot throughput test.

The STA updates local arrangement information after receiving the timeslot arrangement information. The STA periodically polls the timeslot arrangement information to determine whether an ID corresponding to the current timeslot is the same as an ID of the STA, and if yes, increases the priority for accessing the wireless medium service, that is, improves a capability of contending for the wireless medium, or if no, reduces the priority for accessing the wireless medium service, that is, reduces a capability of contending for the wireless medium.

205. The first station polls the first timeslot allocation information.

206. When determining that a station identifier corresponding to a current first timeslot is a station identifier of the first station, the first station updates a current first priority for accessing the wireless medium service by the first station to a second priority.

The second priority is higher than the first priority.

207. The first station sends first data in the first timeslot by using the wireless resource.

It may be understood that when the first station uses the wireless resource, the priority of the first station is high, and only the first station can use the wireless resource to send data in the first timeslot. Alternatively, other stations (such as the second station) can also send data in the first timeslot, but can use the wireless resource to send only a small amount of data.

In some other implementations, after the first station polls the first timeslot allocation information, the method further includes:
when determining that a station identifier corresponding to a current second timeslot is not the station identifier of the first station, the first station updates the current second priority for accessing the wireless medium service by the first station to the first priority; and
the first station sends second data in the second timeslot without using the wireless resource or by using the wireless resource, where a ratio of a size of the second data to a size of the first data is less than a preset value.

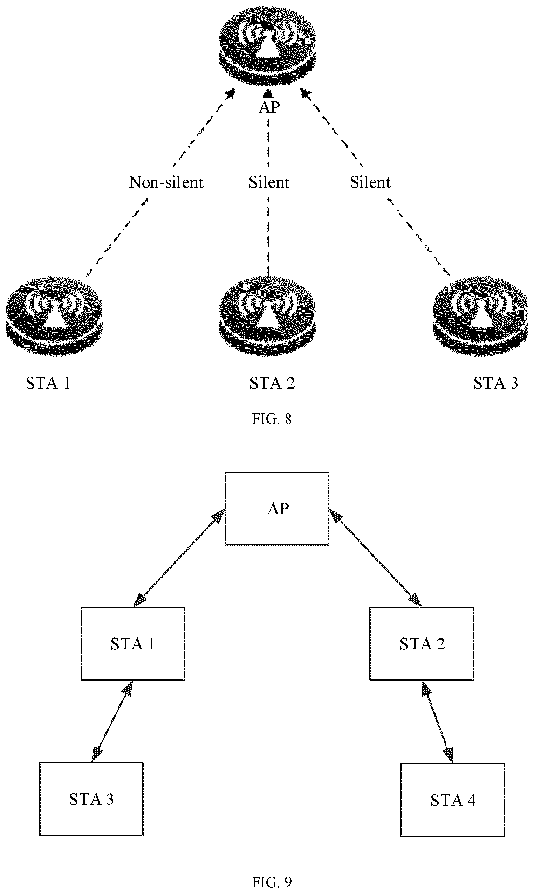

For example, as shown in FIG. 8, the STA 1 has a high priority, and the STA 2 and the STA 3 have low priorities. The low-priority STAs are suppressed by the high-priority STA and cannot send data or can send only a small amount of data. In this way, an effect of silence can be achieved and an interference problem of hidden nodes can be alleviated.

In this embodiment of this application, after the access device obtains the first station state set of the station states in the first time window from the plurality of stations, the access device obtains, in the preset time window, the first timeslot allocation information based on the station states, and the access device broadcasts the first timeslot allocation information to the stations, respectively. Because the first timeslot allocation information includes the timeslot allocation information of the access device for each station for using the wireless resource in the at least one time window, after each station (for example, the first station) obtains the first timeslot allocation information through polling, the station can use the wireless resource to send data in a timeslot allocated to the station. In the timeslot in which the first station sends data, other stations (for example, the second station) can use the wireless resource to send only a small amount of data or cannot use the wireless resource to send data. Therefore, in this wireless resource scheduling manner, the time for each station to use the wireless resource can be properly scheduled, and communication interference from other stations can be avoided when the first station sends data in the timeslot of the first station.

In some implementations, the access device may determine, based on the timeslot allocation information for each station for using the wireless resource in the at least one time window, schedule arrangement information corresponding to each timeslot. The schedule arrangement information includes a receiving station and a sending station corresponding to the corresponding timeslot.

For example, assuming that there are a total of four stations including the STA 1, the STA 2, the STA 3, and the STA 4, a networking topology of the STA 1, the STA 2, the STA 3, and the STA 4 and the access device AP may be shown in FIG. 9. In FIG. 9, an upper-level station of the STA 3 is the STA 1, an upper-level station of the STA 4 is the STA 2, an upper-level station of the STA 1 is the AP, and an upper-level station of the STA 2 is the AP.

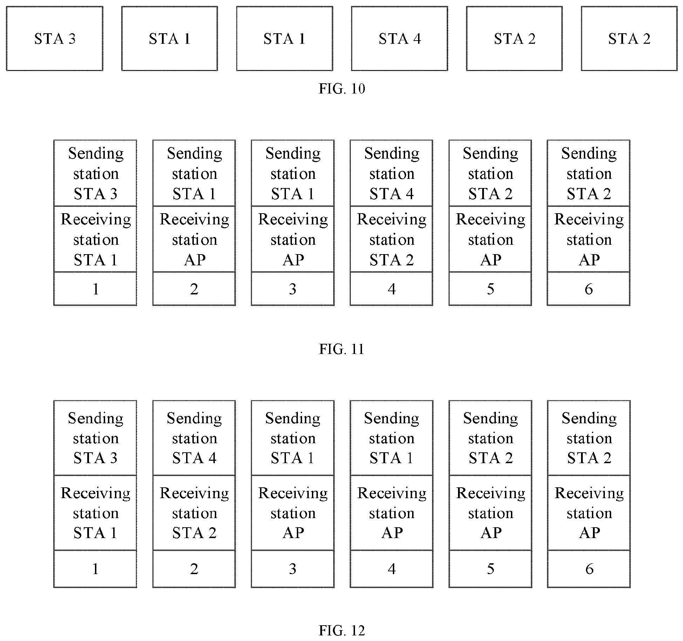

The AP may obtain, based on the station state of each of the STA 1, the STA 2, the STA 3, and the STA 4, timeslot allocation information for each station for using a wireless resource in at least one time window, where timeslot allocation information for each station in one time window may be shown in FIG. 10. In FIG. 10, the STA 3 sends data in a first timeslot, the STA 1 sends data in a second timeslot, the STA 1 sends data in a third timeslot, the STA 4 sends data in a fourth timeslot, the STA 2 sends data in a fifth timeslot, and the STA 2 sends data in a sixth timeslot.

Based on the timeslot allocation information for each station in FIG. 10, schedule arrangement information corresponding to each timeslot as shown in FIG. 11 may be determined. As shown in FIG. 11, in schedule arrangement information 1, a sending station is the STA 3 and a receiving station is the STA 1, that is, in the schedule arrangement information, the STA 3 sends data and the STA 1 receives data; in schedule arrangement information 2, a sending station is the STA 1 and a receiving station is the AP, that is, in the schedule arrangement information, the STA 1 sends data and the AP receives data; in schedule arrangement information 3, a sending station is the STA 1 and a receiving station is the AP, that is, in the schedule arrangement information, the STA 1 sends data and the AP receives data; in schedule arrangement information 4, a sending station is the STA 4 and a receiving station is the STA2, that is, in the schedule arrangement information, the STA 4 sends data and the STA 2 receives data; in schedule arrangement information 5, a sending station is the STA 2 and a receiving station is the AP, that is, in the schedule arrangement information, the STA 2 sends data and the AP receives data; and in schedule arrangement information 6, a sending station is the STA 2 and a receiving station is the AP, that is, in the schedule arrangement information, the STA 2 sends data and the AP receives data.

After obtaining a plurality of pieces of schedule arrangement information, the access device may sort the plurality of pieces of schedule arrangement information by timeslots in the timeslot allocation information to obtain a first arrangement table, and sort the plurality of pieces of schedule arrangement information in the first arrangement table by station addresses of the receiving stations corresponding to the timeslots to obtain a second arrangement table.

Optionally, the station addresses of the receiving stations may be MAC addresses of the receiving stations.

For example, the access device sorts the plurality of pieces of schedule arrangement information by the timeslots in the timeslot allocation information, and the obtained first arrangement table may be shown in FIG. 11. Assuming that the receiving stations are sorted by the station addresses of the receiving stations in FIG. 11, the STA 1, the STA 2, and the AP may be obtained. In this case, the plurality of pieces of schedule arrangement information in the first arrangement table are sorted by the station addresses of the receiving stations corresponding to the timeslots, and the obtained second arrangement table may be shown in FIG. 12. Herein, to enable a plurality of different stations to simultaneously send packets in a same timeslot, that is, to send data concurrently, it is required that the corresponding receiving stations in the plurality of schedule arrangement information inclusive of the sending stations are different and that the sending stations cannot collide with each other. Therefore, sorting by the station addresses of the receiving stations can be performed to facilitate subsequent merging of schedule arrangement information.

In an embodiment, alternatively, the plurality of pieces of schedule arrangement information in the first arrangement table may be sorted by device serial numbers of the receiving stations corresponding to the timeslots, so that the second arrangement table is obtained;
first piece of schedule arrangement information on which no merger decision is performed in the current second arrangement table is determined, a merger decision is performed on the first piece of schedule arrangement information, and whether to-be-merged schedule arrangement information meeting a specified condition exists in other schedule arrangement information after the first piece of schedule arrangement information is determined;
when it is determined that the to-be-merged schedule arrangement information exists, the first piece of schedule arrangement information and the to-be-merged schedule arrangement information are removed from the second arrangement table as a group of target schedule arrangement information, where a group of target schedule arrangement information includes at least two pieces of schedule arrangement information; and
the foregoing steps are repeated until only one first piece of schedule arrangement information or no first piece of schedule arrangement information on which no merger decision is performed exists in the current second arrangement table.

Specifically, the first piece of schedule arrangement information is sequentially compared with the other schedule arrangement information after the first piece of schedule arrangement information, and when a first piece of target other schedule arrangement information meeting the specified condition is determined from the other schedule arrangement information, it is determined that the to-be-merged schedule arrangement information meeting the specified condition exists in the other schedule arrangement information, and the target other schedule arrangement information is used as the to-be-merged schedule arrangement information; or when the first piece of schedule arrangement information is sequentially compared with the other schedule arrangement information after the first piece of schedule arrangement information, and one piece of target other schedule arrangement information meeting the specified condition is determined from the other schedule arrangement information, it is determined that the to-be-merged schedule arrangement information meeting the specified condition exists in the other schedule arrangement information; or
the first piece of schedule arrangement information is separately compared with the other schedule arrangement information after the first piece of schedule arrangement information, and when at least one piece of target other schedule arrangement information meeting the specified condition is determined from the other schedule arrangement information, it is determined that the to-be-merged schedule arrangement information meeting the specified condition exists in the other schedule arrangement information, and the at least one piece of target other schedule arrangement information is used as the to-be-merged schedule arrangement information.

The specified condition is: a receiving station in the other schedule arrangement information is different from a receiving station in the first piece of schedule arrangement information, and a sending station in the other schedule arrangement information is not a neighboring station of the receiving station in the first piece of schedule arrangement information; or a receiving station in the other schedule arrangement information is different from a receiving station in the first piece of schedule arrangement information, and a sending station in the other schedule arrangement information is a neighboring station of the receiving station in the first piece of schedule arrangement information, and signal strength of the neighboring station is not higher than a specified threshold. When the sending station in the other schedule arrangement information is the neighboring station of the receiving station in the first piece of schedule arrangement information, a signal sent by the sending station in the other schedule arrangement information is received by the receiving station in the first piece of schedule arrangement information, causing signal interference. It should be understood that, when strength of the signal sent by the sending station in the other schedule arrangement information is so low (not higher than a specified threshold) that the current receiving station cannot receive the signal (the sending station and the receiving station are neighboring stations), the sending station in the other schedule arrangement information and the receiving station in the first piece of schedule arrangement information do not interfere each other and also meet the specified condition.

The specified condition is to find schedule arrangement information that does not conflict with the first piece of schedule arrangement information from the other schedule arrangement information, so that a sending station in the found target schedule arrangement information can send data concurrently with the sending station in the first piece of schedule arrangement information.

A basis of the specified condition is: there is no conflict with each other, strength of signals that can be received between every two sending stations that can concurrently send data is not high or the sending stations cannot receive the signals, and the receiving stations in the plurality of pieces of schedule arrangement information inclusive of the sending stations are different.

The neighboring station of the receiving station is a sending station whose station information can be received by the receiving station. For example, a structure of the networking topology may be shown in FIG. 9. In addition, when the STA 1 is a receiving station, the STA 1, the STA2, the STA3, and the STA4 may all serve as sending stations. Assuming that the receiving station STA 1 can receive station information sent by the sending station STA 2 and the sending station STA 3 separately, but cannot receive station information sent by the sending station STA 4, the sending station STA 2 and the sending station STA 3 may be used as neighboring stations of the receiving station STA 1. In addition, because the sending station STA 1 and the receiving station STA 1 are the same station, the sending station STA 1 may also be used as a neighboring station of the receiving station STA 1.

The specified threshold may be adjusted based on an actual situation, and may be set to - 90 dBm in this embodiment.

For example, FIG. 12 shows the current second arrangement table. Schedule arrangement information 1 is compared with the following five pieces of schedule arrangement information sequentially or separately. Assuming that receiving stations in schedule arrangement information 3, schedule arrangement information 4, schedule arrangement information 5, and schedule arrangement information 6 are all different from a receiving station in schedule arrangement information 1, and that sending stations in schedule arrangement information 3, schedule arrangement information 4, schedule arrangement information 5, and schedule arrangement information 6 are all neighboring stations of the receiving station in schedule arrangement information 1, it may be determined that none of schedule arrangement information 3, schedule arrangement information 4, schedule arrangement information 5, and schedule arrangement information 6 is to-be-merged schedule arrangement information. However, the receiving station in schedule arrangement information 2 is different from the receiving station in schedule arrangement information 1, and the sending station in schedule arrangement information 2 is not a neighboring station of the receiving station in schedule arrangement information 1. In this case, it may be determined that schedule arrangement information 2 is to-be-merged schedule arrangement information, and schedule arrangement information 1 and schedule arrangement information 2 are used as a group of target schedule arrangement information, and then schedule arrangement information 1 and schedule arrangement information 2 are removed from the current second arrangement table.

Based on the foregoing processing, the current second arrangement table includes schedule arrangement information 3, schedule arrangement information 4, schedule arrangement information 5, and schedule arrangement information 6. Schedule arrangement information 3 is compared with the following three pieces of schedule arrangement information sequentially or separately. Because receiving stations in schedule arrangement information 4, schedule arrangement information 5, and schedule arrangement information 6 are all the same as the receiving station in schedule arrangement information 3, it may be determined that none of schedule arrangement information 4, schedule arrangement information 5, and schedule arrangement information 6 is to-be-merged schedule arrangement information.

Based on the foregoing processing, the current second arrangement table includes schedule arrangement information 4, schedule arrangement information 5, and schedule arrangement information 6. Schedule arrangement information 4 is compared with the following two pieces of schedule arrangement information sequentially or separately. Because receiving stations in schedule arrangement information 5 and schedule arrangement information 6 are both the same as the receiving station in schedule arrangement information 4, it may be determined that neither schedule arrangement information 5 nor schedule arrangement information 6 is to-be-merged schedule arrangement information.

Based on the foregoing processing, the current second arrangement table includes schedule arrangement information 5 and schedule arrangement information 6. Schedule arrangement information 5 is compared with the following schedule arrangement information 6. Because the receiving station in schedule arrangement information 6 is the same as that in schedule arrangement information 5, it may be determined that schedule arrangement information 6 is not to-be-merged schedule arrangement information.

When it is determined that at least one group of target schedule arrangement information meeting the specified condition exists in the plurality of pieces of schedule arrangement information, timeslots in at least two pieces of schedule arrangement information in each group of target schedule arrangement information are merged.

Timeslots are re-allocated based on a result of merging each group of target schedule arrangement information, to obtain the first timeslot allocation information. To be specific, timeslots are re-allocated for the plurality of pieces of schedule arrangement information based on a time sequence of timeslots corresponding to each merged group of target schedule arrangement information and timeslots corresponding to unmerged schedule arrangement information, to obtain the first timeslot allocation information.

That the timeslots are re-allocated based on the result of merging each group of target schedule arrangement information, to obtain the first timeslot allocation information includes two cases.

In a first case, when timeslots in at least two pieces of schedule arrangement information in each group of target schedule arrangement information are merged, when all timeslots in the schedule arrangement information can be merged, that is, there is no unmerged schedule arrangement information in the plurality of pieces of schedule arrangement information, timeslots may be re-allocated only based on the result of merging each group of target schedule arrangement information, to obtain the first timeslot allocation information.

In a second case, when timeslots in at least two pieces of schedule arrangement information in each group of target schedule arrangement information are merged, when some timeslots in the schedule arrangement information can be merged and some timeslots in the schedule arrangement information cannot be merged, that is, there is unmerged schedule arrangement information in the plurality of pieces of schedule arrangement information, timeslots may be re-allocated based on the result of merging each group of target schedule arrangement information and the unmerged schedule arrangement information, to obtain the first timeslot allocation information.

For example, the arrangement table includes eight pieces of schedule arrangement information in total: schedule arrangement information 1, schedule arrangement information 2, schedule arrangement information 3, schedule arrangement information 4, schedule arrangement information 5, schedule arrangement information 6, schedule arrangement information 7, and schedule arrangement information 8, where schedule arrangement information 1 corresponds to a first timeslot, schedule arrangement information 2 corresponds to a second timeslot, schedule arrangement information 3 corresponds to a third timeslot, ..., schedule arrangement information 8 corresponds to an eighth timeslot.

Assuming that based on the performed merger decision, it may be determined that schedule arrangement information 1, schedule arrangement information 3, and schedule arrangement information 5 are a group of target schedule arrangement information, and that schedule arrangement information 2 and schedule arrangement information 6 are a group of target schedule arrangement information, timeslots in schedule arrangement information 1, schedule arrangement information 3, and schedule arrangement information 5 can be merged, so that schedule arrangement information 1, schedule arrangement information 3, and schedule arrangement information 5 correspond to a same timeslot, and timeslots in schedule arrangement information 2 and schedule arrangement information 6 can be merged, so that schedule arrangement information 2 and schedule arrangement information 6 correspond to a same timeslot.

After the merger, it may be determined that schedule arrangement information 1, schedule arrangement information 2, schedule arrangement information 3, schedule arrangement information 4, schedule arrangement information 5, schedule arrangement information 6, schedule arrangement information 7, and schedule arrangement information 8 correspond to five timeslots in total. In this case, timeslots may be re-allocated for the eight pieces of schedule arrangement information based on a time sequence of timeslots corresponding to the schedule arrangement information, to obtain schedule arrangement information 1 corresponding to the first timeslot, schedule arrangement information 2 corresponding to the second timeslot, schedule arrangement information 3 corresponding to the first timeslot, schedule arrangement information 4 corresponding to the third timeslot, schedule arrangement information 5 corresponding to the first timeslot, schedule arrangement information 6 corresponding to the second timeslot, schedule arrangement information 7 corresponding to the fourth timeslot, and schedule arrangement information 8 corresponding to the fifth timeslot.

In an embodiment, when it is determined that at least one group of target schedule arrangement information meeting the specified condition exists in the plurality of pieces of schedule arrangement information, timeslots in at least two pieces of schedule arrangement information in each group of target schedule arrangement information may be further merged into a timeslot earliest in time in this group of target schedule arrangement information, and then timeslots are re-allocated based on the result of merging each group of target schedule arrangement information, to obtain the first timeslot allocation information.

For example, assuming that a group of target schedule arrangement information includes three pieces of schedule arrangement information A, B and C, where a timeslot corresponding to A is 1, a timeslot corresponding to B is 4, and a timeslot corresponding to C is 5, timeslots corresponding to B and C may be merged into the timeslot corresponding to A, that is, after being merged, the timeslots corresponding to A, B and C are all 1. Assuming that a group of target schedule arrangement information includes two pieces of schedule arrangement information D and E, where a timeslot corresponding to D is 3 and a timeslot corresponding to E is 6, the timeslot corresponding to E may be merged into the timeslot corresponding to D, that is, after being merged, timeslots corresponding to D and E are both 3.

The following describes the foregoing solution by using two specific embodiments.

Embodiment 1: Assuming that the first arrangement table includes seven pieces of schedule arrangement information A, B, C, D, E, F, and G, where a timeslot corresponding to A is 1, a timeslot corresponding to B is 2, a timeslot corresponding to C is 3, a timeslot corresponding to D is 4, a timeslot corresponding to E is 5, a timeslot corresponding to F is 6, and a timeslot corresponding to G is 7, after a merger decision is performed, it may be determined that A, D, and E are a group of target schedule arrangement information, and that B and G are a group of target schedule arrangement information. In this case, the timeslots corresponding to D and E may be merged into the timeslot corresponding to A, and the timeslot corresponding to G may be merged into the timeslot corresponding to B. After the merger, the following may be obtained: A timeslot corresponding to A, D, and E is 1, a timeslot corresponding to B and G is 2, a timeslot corresponding to C is 3, a timeslot corresponding to F is 6, and a total quantity of timeslots is 4. In this case, timeslots are re-allocated for the seven pieces of schedule arrangement information based on a time sequence of timeslots corresponding to the schedule arrangement information, and the obtained first timeslot allocation information is: a timeslot corresponding to A, D, and E is 1, a timeslot corresponding to B and G is 2, a timeslot corresponding to C is 3, and a timeslot corresponding to F is 4.

Embodiment 2: Assuming that the first arrangement table includes eight pieces of schedule arrangement information A, B, C, D, E, F, G, and H, where a timeslot corresponding to A is 1, a timeslot corresponding to B is 2, a timeslot corresponding to C is 3, a timeslot corresponding to D is 4, a timeslot corresponding to E is 5, a timeslot corresponding to F is 6, a timeslot corresponding to G is 7, and a timeslot corresponding to H is 8, after a merger decision is performed, it may be determined that A, C, and E are a group of target schedule arrangement information, and that B, D, and F are a group of target schedule arrangement information. In this case, the timeslots corresponding to C and E may be merged into the timeslot corresponding to A, and the timeslots corresponding to D and F may be merged into the timeslot corresponding to B. After the merger, the following may be obtained: A timeslot corresponding to A, C, and E is 1, a timeslot corresponding to B, D, and F is 2, a timeslot corresponding to G is 7, a timeslot corresponding to H is 8, and a total quantity of timeslots is 4. In this case, timeslots are re-allocated for the eight pieces of schedule arrangement information based on a time sequence of timeslots corresponding to the schedule arrangement information, and the obtained first timeslot allocation information is: a timeslot corresponding to A, C, and E is 1, a timeslot corresponding to B, D, and F is 2, a timeslot corresponding to G is 3, and a timeslot corresponding to H is 4.

For example, based on the performed merger decision, it may be obtained that schedule arrangement information 1 and schedule arrangement information 4 in FIG. 11 are a group of target schedule arrangement information. In this case, the timeslots in schedule arrangement information 1 and schedule arrangement information 4 may be merged into the timeslot in schedule arrangement information 1, that is, the timeslots in schedule arrangement information 1 and schedule arrangement information 4 are both the first timeslot.

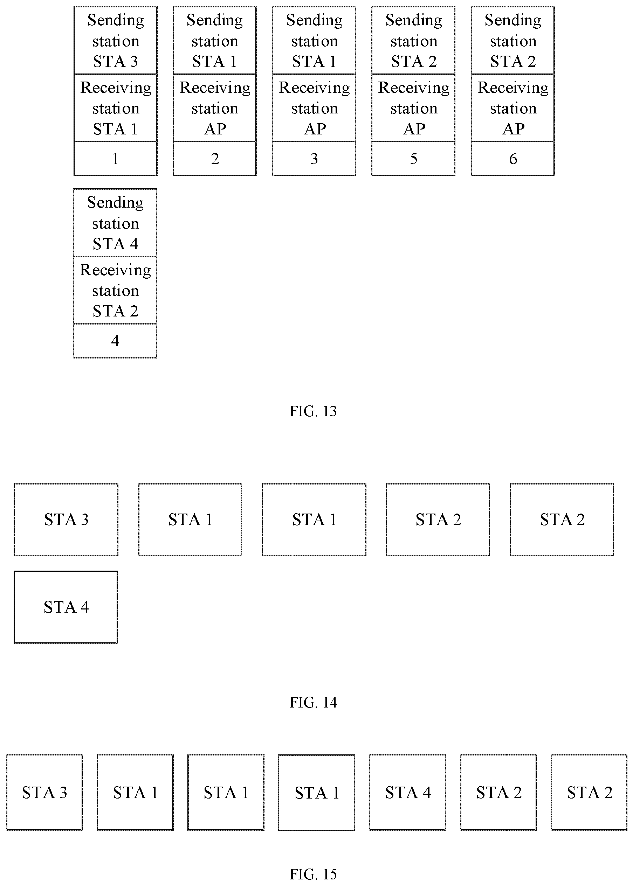

After the merger, the following may be obtained: The timeslots corresponding to schedule arrangement information 1 and schedule arrangement information 4 are the first timeslot, the timeslot corresponding to schedule arrangement information 2 is the second timeslot, the timeslot corresponding to schedule arrangement information 3 is the third timeslot, the timeslot corresponding to schedule arrangement information 5 is the fifth timeslot, and the timeslot corresponding to schedule arrangement information 6 is the sixth timeslot, that is, the six pieces of schedule arrangement information correspond to five timeslots. In this case, timeslots may be re-allocated for the six pieces of schedule arrangement information based on a time sequence of timeslots corresponding to the schedule arrangement information, to obtain a target arrangement table as shown in FIG. 13. In FIG. 13, timeslots in schedule arrangement information 1 and schedule arrangement information 4 are the first timeslot, a timeslot in schedule arrangement information 2 is the second timeslot, a timeslot in schedule arrangement information 3 is the third timeslot, a timeslot in schedule arrangement information 5 is the fourth timeslot, and a timeslot in schedule arrangement information 6 is the fifth timeslot.

Further, based on the target arrangement table, the obtained first timeslot allocation information may be shown in FIG. 14. In FIG. 14, the STA3 and the STA 4 can send data concurrently in a same timeslot.

In the present invention, after each station is successfully associated with an upper-level station, the station may send station information to the access device, where the station information may include a MAC address of the station and a MAC address of the upper-level device associated with the station. Each station can also receive signals from nearby stations, generate nearby station information, and periodically send the nearby station information to the access device, where the nearby station information may include MAC addresses and signal strength of the nearby stations.

After receiving the station information sent by each station, the access device determines the networking topology of each station, and determine, based on the networking topology and the station state of each station, timeslot allocation information for each station for using a wireless resource in at least one time window.

For example, after receiving the station information sent by each station, the access device determines that the networking topology of each station is shown in FIG. 9, and then may obtain the timeslot allocation information shown in FIG. 10. Based on the station state of each station, the access device may determine that real-time traffic of the STA 1 is heavy, and may allocate one more timeslot to the STA 1, to obtain the timeslot allocation information shown in FIG. 15.

In some other implementations, after the networking topology of each station becomes stable, the access device may determine non-colliding sending stations in the networking topology based on the nearby station information sent by each station, reduce the non-colliding sending stations, generate the first timeslot allocation information, and broadcast the first timeslot allocation information to the stations, respectively.

A condition of a stable networking topology may be that the networking topology has not changed within a specified time threshold, where the specified time threshold may be adjusted based on an actual situation, and may be set to 1 minute in this embodiment.

Specifically, a process of determining the non-colliding sending stations in the networking topology may be as follows:
1. After obtaining the first arrangement table, arrange all the schedule arrangement information in the first arrangement table based on station addresses of the receiving stations to obtain the second arrangement table.
2. Make a copy of the second arrangement table and name the copy "second arrangement table_1".
3. Traverse the second arrangement table_1 in sequence, and starting from the first piece of non-traversed schedule arrangement information, extract the first piece of non-traversed schedule arrangement information.
   (1) Name the extracted schedule arrangement information first schedule arrangement information.
   (2) Determine a receiving station and a sending station in the first schedule arrangement information.
4. Make a copy of all content in the second arrangement table_1 except the first schedule arrangement information, and name the copy "second arrangement table_2".
5. Continue to traverse content in the second arrangement table_2 from the beginning, and perform the following operations on each piece of schedule arrangement information in the second arrangement table_2, that is, extract the schedule arrangement information in the second arrangement table_2 piece by piece and perform the following operations.
   (1) When there is no content in the second arrangement table_2 in this case, end the traversal and return "search fails".
   (2) When there is content in the second arrangement table_2, the extracted schedule arrangement information is named "second schedule arrangement information".
   (3) Obtain a sending station and a receiving station in the second schedule arrangement information.
   (4) When the receiving node in the second schedule arrangement information is the same as the receiving node in the first schedule arrangement information, it indicates that the second schedule arrangement information conflicts with the second schedule arrangement information in packet reception. In this case, put the second schedule arrangement information back to an original position in the second arrangement table_2, and continue to traverse remaining content.
   (5) When the sending node in the second schedule arrangement information appears in a neighbor information table of the receiving node in the first schedule arrangement information, and signal strength is higher than the specified threshold, it indicates that packet sending of the sending node in the second schedule arrangement information affects packet reception of the receiving node in the first schedule arrangement information. Therefore, put the second schedule arrangement information back to the original position in the second arrangement table_2, and continue to traverse the remaining content.
   (6) When the second schedule arrangement information meets a requirement, that is, the conditions in the foregoing steps (4) and (5) are not hit, end the search and return "search succeeds".
   (7) Repeat the foregoing steps (1) to (6) until the search is finished or the search succeeds.
6. When returning "search succeeds", remove the first schedule arrangement information and the second schedule arrangement information from the second arrangement table_1, continue to perform traversal, add the first schedule arrangement information and the second schedule arrangement information to a merger table, and allocate a merger ID.
7. When returning "search fails", put the first schedule arrangement information back to the original position in the second arrangement table_1, and continue to perform traversal until all schedule arrangement information is traversed.

The sending time of each station is staggered, that is, all stations occupy a data transmission time of an air interface exclusively. However, actually, for stations without signal collisions, data can be sent concurrently.

Therefore, in this embodiment of this application, after the access device determines, based on the timeslot allocation information for each station for using the wireless resource in the at least one time window, the schedule arrangement information corresponding to each timeslot, the access device can determine whether at least one group of target schedule arrangement information meeting the specified condition exists in the plurality of pieces of schedule arrangement information, and can find non-colliding stations that can send data concurrently among the stations.

In addition, when determining that the at least one group of target schedule arrangement information exists, the access device can merge the timeslots in the at least two pieces of schedule arrangement information in each group of target schedule arrangement information, so that the non-colliding stations that can send data concurrently can send data in a same timeslot.

In addition, the access device may further re-allocate timeslots for the plurality of pieces of schedule arrangement information based on the time sequence of the timeslots corresponding to each merged group of target schedule arrangement information and the timeslots corresponding to the unmerged schedule arrangement information, to obtain the first timeslot allocation information, to reduce the sending time of the non-colliding stations that can send data concurrently among the stations and further improve throughput of the entire system.

In some embodiments of this application, the access device may further periodically or randomly update the timeslot allocation information. In this embodiment of this application, periodically updating the timeslot allocation information is used as an example.

The station state of each station includes real-time traffic and the current priority for accessing the wireless medium service, and the method further includes:
the access device receives a second station state set from the stations, where the second station state set includes station states of the plurality of stations in a second time window, and a start time of the second time window lags behind an end time of the first time window; and
the access device updates a timeslot weight of each station in the first timeslot allocation information based on the second station state set, where a value of the timeslot weight is in a positive relationship with a priority and/or transmission traffic of the station.

It can be learned that updating the timeslot allocation information can avoid the following problem: In long-term fixed timeslot allocation information, some stations may not need to send data, or need to send only a small amount of data, but other stations need to send a large amount of data in some timeslots; and when these situations change, improper allocation of wireless resources in the time period may occur because of the fixed timeslot allocation information. Therefore, to improve utilization of wireless resources in different time periods, in this embodiment of this application, the wireless resource occupation time of each station is updated more properly by updating the timeslot allocation information.

For better implementation of the method of this application, embodiments of this application further provide an access device and a station (the first station in the method embodiment is used as an example, the same is true for other stations, and details are not described again).

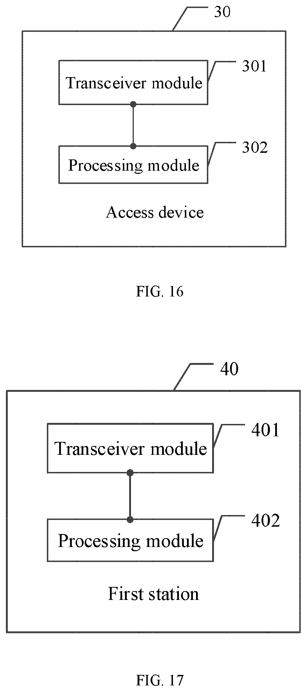

FIG. 16 is a schematic diagram of a structure of an access device 30 in an embodiment of this application. The access device 30 may specifically include the following structure:
a transceiver module 301, configured to obtain a first station state set, where the first station state set includes station states of a plurality of stations in a first time window; and
a processing module 302, configured to obtain, in a preset time window, first timeslot allocation information based on the station states, where the first timeslot allocation information includes timeslot allocation information of the access device for each station for using a wireless resource in at least one time window, where
the transceiver module 301 is further configured to broadcast the first timeslot allocation information obtained by the processing module 302 to each station.

In some embodiments, the processing module 302 is specifically configured to:
obtain a preset mapping relationship, where the preset mapping relationship includes a mapping relationship between a plurality of timeslot parameters, timeslot parameter values corresponding to the plurality of timeslot parameters, and description information of the timeslot parameters; and
generate the first timeslot allocation information based on the preset mapping relationship and the station states.

In some embodiments, a station state of each station includes real-time traffic and a current priority for accessing a wireless medium service, and the processing module 302 is further configured to:
receive a second station state set from the stations by using the transceiver module 301, where the second station state set includes station states of the plurality of stations in a second time window, and a start time of the second time window lags behind an end time of the first time window; and
update a timeslot weight of each station in the first timeslot allocation information based on the second station state set, where a value of the timeslot weight is in a positive relationship with a priority and/or transmission traffic of the station.

In some embodiments, the plurality of stations include a first station and a second station, and a priority of the first station is higher than a priority of the second station;
the first timeslot allocation information includes timeslot allocation information for using wireless resources in at least three time windows, the at least three time windows include at least a third time window and a fourth time window, and the fourth time window lags behind the third time window;
a quantity of timeslots occupied by the first station in each time window is larger than a quantity of timeslots occupied by the second station in each time window; and
a time domain position of the first station in the third time window corresponds to a time domain position of the first station in the fourth time window, and a time domain position of the second station in the third time window corresponds to a time domain position of the second station in the fourth time window.

In some embodiments, the processing module 302 is further configured to:
determine, based on the timeslot allocation information for each station for using the wireless resource in the at least one time window, schedule arrangement information corresponding to each timeslot, where the schedule arrangement information includes a receiving station and a sending station corresponding to the corresponding timeslot;
sort a plurality of pieces of obtained schedule arrangement information by timeslots in the timeslot allocation information, to obtain a first arrangement table;
determine whether at least one group of target schedule arrangement information meeting a specified condition exists in the plurality of pieces of schedule arrangement information, where a group of target schedule arrangement information includes at least two pieces of schedule arrangement information;
when the at least one group of target schedule arrangement information exists, merge timeslots in at least two pieces of schedule arrangement information in each group of target schedule arrangement information; and
re-allocate timeslots based on a result of merging each group of target schedule arrangement information, to obtain the first timeslot allocation information.

In some embodiments, the processing module 302 is further configured to:
sort the plurality of pieces of schedule arrangement information in the first arrangement table by station addresses of receiving stations corresponding to the timeslots, to obtain a second arrangement table;
determine first piece of schedule arrangement information on which no merger decision is performed in the current second arrangement table, perform a merger decision on the first piece of schedule arrangement information, and determine whether to-be-merged schedule arrangement information meeting the specified condition exists in other schedule arrangement information after the first piece of schedule arrangement information;
when determining that the to-be-merged schedule arrangement information exists, remove, from the second arrangement table, the first piece of schedule arrangement information and the to-be-merged schedule arrangement information as a group of target schedule arrangement information; and
repeat the foregoing steps until only one first piece of schedule arrangement information or no first piece of schedule arrangement information on which no merger decision is performed exists in the current second arrangement table.

In some embodiments, the processing module 302 is further configured to:
sequentially compare the first piece of schedule arrangement information with the other schedule arrangement information after the first piece of schedule arrangement information, and when a first piece of target other schedule arrangement information meeting the specified condition is determined from the other schedule arrangement information, determine that the to-be-merged schedule arrangement information meeting the specified condition exists in the other schedule arrangement information; or
separately compare the first piece of schedule arrangement information with the other schedule arrangement information after the first piece of schedule arrangement information, and when at least one piece of target other schedule arrangement information meeting the specified condition is determined from the other schedule arrangement information, determine that the to-be-merged schedule arrangement information meeting the specified condition exists in the other schedule arrangement information;
where the meeting the specified condition is: a receiving station in the other schedule arrangement information is different from a receiving station in the first piece of schedule arrangement information, and a sending station in the other schedule arrangement information is not a neighboring station of the receiving station in the first piece of schedule arrangement information; or a receiving station in the other schedule arrangement information is different from a receiving station in the first piece of schedule arrangement information, and a sending station in the other schedule arrangement information is a neighboring station of the receiving station in the first piece of schedule arrangement information, and signal strength of the neighboring station is not higher than a specified threshold.

In some embodiments, the processing module 302 is further configured to:
re-allocate timeslots for the plurality of pieces of schedule arrangement information based on a time sequence of timeslots corresponding to each merged group of target schedule arrangement information and timeslots corresponding to unmerged schedule arrangement information, to obtain the first timeslot allocation information.

In this embodiment of this application, after the transceiver module 301 of the access device 30 obtains the first station state set of the station states in the first time window from the plurality of stations, the processing module 302 of the access device 30 obtains, in the preset time window, the first timeslot allocation information based on the station states, and the access device broadcasts the first timeslot allocation information to the stations, respectively. Because the first timeslot allocation information includes the timeslot allocation information of the access device 30 for each station for using the wireless resource in the at least one time window, after each station (for example, the first station) obtains the first timeslot allocation information through polling, the station can use the wireless resource to send data in a timeslot allocated to the station. In the timeslot in which the first station 40 sends data, other stations (for example, the second station) can use the wireless resource to send only a small amount of data or cannot use the wireless resource to send data. Therefore, in this wireless resource scheduling manner, the time for each station to use the wireless resource can be properly scheduled, and communication interference from other stations can be avoided when the first station sends data in the timeslot of the first station.

FIG. 17 is a schematic diagram of a structure of a first station 40 in an embodiment of this application. The first station 40 may specifically include the following structure:
a transceiver module 401, configured to receive first timeslot allocation information from an access device, where the first timeslot allocation information includes timeslot allocation information of the access device for each station for using a wireless resource in at least one time window; and
a processing module 402, configured to: poll the first timeslot allocation information; and when determining that a station identifier corresponding to a current first timeslot is a station identifier of the first station, update a current first priority for accessing a wireless medium service by the first station to a second priority, where the second priority is higher than the first priority, where
the transceiver module 401 is further configured to send first data in the first timeslot by using the wireless resource.

In some embodiments, the processing module 402 is specifically configured to:
obtain, by using the transceiver module 401, an EDCA parameter, and update the EDCA parameter, to update the current first priority for accessing the wireless medium service by the first station to the second priority.

In some embodiments, after polling the first timeslot allocation information, the processing module 402 is further configured to:
when determining that a station identifier corresponding to a current second timeslot is not the station identifier of the first station, update the current second priority for accessing the wireless medium service by the first station to the first priority; and
send, by using the transceiver module 401, second data in the second timeslot without using the wireless resource or by using the wireless resource, where a ratio of a size of the second data to a size of the first data is less than a preset value.

In this embodiment of this application, the transceiver module 401 of the first station 40 receives the first timeslot allocation information from the access device 30, where the first timeslot allocation information includes the timeslot allocation information of the access device 30 for each station for using the wireless resource in the at least one time window. Therefore, the processing module 402 of the first station 40 can control the transceiver module 401 to send data by using the wireless resource in a timeslot allocated to the first station. In the timeslot in which the first station 40 sends data, other stations (for example, a second station) can use the wireless resource to send only a small amount of data or cannot use the wireless resource to send data. Therefore, in this wireless resource scheduling manner, the time for each station to use the wireless resource can be properly scheduled, and communication interference from other stations can be avoided when the first station sends data in the timeslot of the first station.

A software system structure of a time division multiplexing system is shown in FIG. 1. FIG. 1 shows a control module, a device management module, a load balancing module, a timer module, and their calling relationships.
1.The control module is responsible for scheduling other modules. At an AP end, the control module allocates working timeslots properly and effectively based on information provided by other modules, and synchronizes timeslot allocation information to a STA end. At the STA end, the control module mainly responds to the received timeslot allocation information, and improves/reduces, based on whether a current timeslot belongs to the STA, a device capability of contending for a wireless medium.
2.The device management module is responsible for access control in time division multiplexing of devices, and unified management of information of devices participating in scheduling.
3.The load balancing module measures real-time traffic and a service priority of each STA, calculates a timeslot weight of the STA according to a related load balancing algorithm, and records the weight in the device management module. The control module generates the timeslot allocation information based on timeslot weight information and synchronizes the timeslot allocation information.
4. The timer module generates a timing interrupt to trigger the control module to respond: publishing timeslots and adjusting a priority for accessing the wireless medium.

Specifically, at the AP end, when the STA accesses the AP, the device management module may be responsible for access control of the STA and unified management of the information of the STAs participating in the scheduling; the load balancing module measures the real-time traffic and the service priority of each access STA, calculates the timeslot weight of the STA according to the related load balancing algorithm, and records the timeslot weight in the device management module, and the control module generates the timeslot allocation information based on the timeslot weight information and synchronizes the timeslot allocation information; the timer module generates the timing interrupt to trigger the control module to respond: publishing the timeslots and adjusting the priority for accessing the wireless medium; and when the timer module generates the timing interrupt, the control module may further allocate working timeslots properly and effectively based on the information provided by the device management module and the load balancing module, and synchronize the timeslot allocation information to the STA end.

At the STA end, the control module responds to the received timeslot allocation information, and determines, based on whether the current timeslot belongs to the STA, whether to send data in the current timeslot, that is, improves/reduces the device capability of contending for the wireless medium.

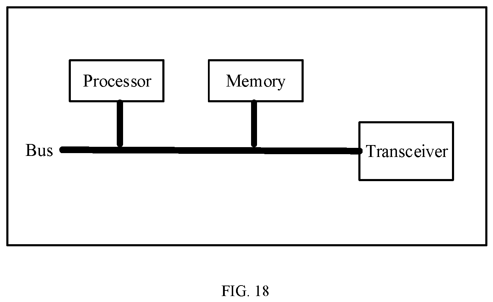

This application further provides a processing device. FIG. 18 is a schematic diagram of a structure of a processing device in this application. Specifically, the processing device provided in this application includes a processor. The processor is configured to execute a computer program stored in a memory, to implement the steps in the embodiment corresponding to any one of FIG. 1 to FIG. 15, or the processor is configured to execute a computer program stored in a memory, to implement the function of each module in the embodiment corresponding to FIG. 16 or FIG. 17.

For example, the computer program may be divided into one or more modules/units, and the one or more modules/units are stored in the memory and executed by the processor to complete this application. The one or more modules/units may be a series of computer program instruction segments that can complete specific functions, and the instruction segments are used to describe an execution process of the computer program in a computer apparatus.

The processing device may include, but is not limited to, the processor and the memory. It may be understood by a person skilled in the art that the example is only an example of the processing device, and does not constitute a limitation on the processing device. The processing device may include more or fewer components than those shown in the figure, or some components are combined, or component arrangements are different. For example, the processing device may further include an input/output device, a network access device, a bus, and the like. The processor, the memory, the input/output device, the network access device, and the like are connected by using a bus.

The processor may be a central processing unit (English: Central Processing Unit, CPU for short), or may be another general purpose processor, a digital signal processor (English: Digital Signal Processor, DSP for short), an application specific integrated circuit (English: Application Specific Integrated Circuit, ASIC for short), a field programmable gate array (English: Field-Programmable Gate Array, FPGA for short) or another programmable logic device, a discrete gate or transistor logic device, a discrete hardware component, or the like. The general purpose processor may be a microprocessor, or the processor may be any conventional processor or the like. The processor is a control center of the processing device, and uses various interfaces and lines to connect parts of the entire processing device.

The memory may be configured to store a computer program and/or module. The processor implements various functions of the computer apparatus by running or executing the computer program and/or module stored in the memory and invoking data stored in the memory. The memory may primarily include a program storage area and a data storage area. The program storage area may store an operating system, an application program (such as an audio play function and an image play function) required by at least one function, and the like. The data storage area may store data (such as audio data and video data) created based on use of the processing device. In addition, the memory may include a high-speed random access memory, and may further include a non-volatile memory, for example, a hard disk, a memory, a plug-in hard disk, a smart media card (English: Smart Media Card, SMC for short), a secure digital (English: Secure Digital, SD for short) card, a flash card (English: Flash Card), at least one disk storage device, a flash memory device, or any other volatile solid-state storage device.

A display screen is configured to display characters of at least one character type output by the input/output unit.

A person skilled in the art may clearly understand that, for the purpose of convenient and brief description, for a detailed working process of the foregoing apparatus, processing device, and corresponding modules, refer to descriptions in the embodiment corresponding to any one of FIG. 1 to FIG. 15, and details are not described herein again.

A person of ordinary skill in the art may understand that all or a part of the steps of the method embodiments may be completed by instructions, or by related hardware controlled by instructions. The instructions may be stored in a computer-readable storage medium, and loaded and executed by the processor.

Therefore, an embodiment of this application provides a computer-readable storage medium. The computer-readable storage medium stores a plurality of instructions. The instructions can be loaded by a processor to perform the steps in the embodiment corresponding to any one of FIG. 1 to FIG. 15. For specific operations, refer to the description in the embodiment corresponding to any one of FIG. 1 to FIG. 15. Details are not described herein again.

The computer-readable storage medium may include a read-only memory (English: Read-Only Memory, ROM for short), a random access memory (English: Random Access Memory, RAM for short), a magnetic disk, or an optical disc.

The instructions stored in the computer-readable storage medium may perform the steps in the embodiment corresponding to any one of FIG. 1 to FIG. 15 in this application. Therefore, beneficial effects that can be achieved in the embodiment corresponding to any one of FIG. 1 to FIG. 15 in this application can be achieved. For details, refer to the foregoing descriptions. Details are not described herein again.

The foregoing describes in detail the wireless resource scheduling method, apparatus, and storage medium provided in this application. In the embodiments of this application, specific examples are used to describe principles and implementations of this application. The foregoing descriptions of the embodiments are merely provided to help understand the method and core idea of this application. In addition, a person skilled in the art can make variations and modifications to this application in terms of specific implementations and application scopes according to the idea of this application. Therefore, content of this specification shall not be construed as a limitation on this application. The present application is described with reference to the flowcharts and/or block diagrams of the method, the device (system), and the computer program product based on the embodiments of the present application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

Alternatively, these computer program instructions may be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

Alternatively, these computer program instructions may be loaded onto a computer or another programmable data processing device, so that a series of operations and steps are performed on the computer or the other programmable device, to generate computer-implemented processing. Therefore, the instructions executed on the computer or the other programmable device provide steps for implementing a specific function in one or more processes in the flowcharts and/or in one or more blocks in the block diagrams.

## Claims

1. A wireless resource scheduling method, comprising:
obtaining, by an access device, a first station state set, wherein the first station state set comprises station states of a plurality of stations in a first time window;
determining, by the access device, networking topologies of the plurality of stations based on station information from the plurality of stations, wherein the station information comprises medium access control addresses of the plurality of stations and medium access control addresses of upper-level devices associated with the plurality of stations;
obtaining, by the access device, nearby station information comprising medium access control addresses and signal strengths of nearby stations with respect to each of the plurality of stations;
obtaining, by the access device in a preset time window, first timeslot allocation information based on the networking topologies, the station states and the nearby station information, wherein the first timeslot allocation information comprises timeslot allocation information of the access device for each station for using a wireless resource in at least one time window, wherein the first time window, the preset time window and the at least one time window are different from each other; and
broadcasting, by the access device, the first timeslot allocation information to the stations, respectively;
wherein the obtaining, by the access device, the first timeslot allocation information based on the networking topologies, the station states and the nearby station information, comprises:
determining, based on the timeslot allocation information for each station for using the wireless resource in the at least one time window, a plurality of pieces of schedule arrangement information corresponding to each timeslot, wherein a piece of the schedule arrangement information comprises a receiving station and a sending station corresponding to a corresponding timeslot;
sorting the plurality of pieces of obtained schedule arrangement information by timeslots in the timeslot allocation information, to obtain a first arrangement table;
determining whether at least one group of pieces of target schedule arrangement information meeting a specified condition exists in the plurality of pieces of schedule arrangement information, wherein a group of target schedule arrangement information comprises at least two pieces of schedule arrangement information;
merging, when the at least one group of pieces of target schedule arrangement information exists, timeslots for the at least two pieces of schedule arrangement information in each group of target schedule arrangement information; and
re-allocating timeslots based on a result of merging each group of target schedule arrangement information, to obtain a first timeslot allocation information.

2. The method according to claim 1, wherein the obtaining, by the access device, the first timeslot allocation information based on the networking topologies, the station states and the nearby station information, comprises:
obtaining a preset mapping relationship, wherein the preset mapping relationship comprises a mapping relationship between a plurality of timeslot parameters, timeslot parameter values corresponding to the plurality of timeslot parameters, and description information of the timeslot parameters; and
generating the first timeslot allocation information based on the preset mapping relationship and the station states.

3. The method according to claim 1 or 2, wherein a station state of each station comprises real-time traffic and a current priority for accessing a wireless medium service, and the method further comprises:
receiving, by the access device, a second station state set from the stations, wherein the second station state set comprises station states of the plurality of stations in a second time window, and a start time of the second time window lags behind an end time of the first time window; and
updating, by the access device, a timeslot weight of each station in the first timeslot allocation information based on the second station state set, wherein a value of the timeslot weight is in a positive relationship with a priority and/or transmission traffic of a respective station.

4. The method according to claim 3, wherein the plurality of stations comprise a first station and a second station, and a priority of the first station is higher than a priority of the second station;
the first timeslot allocation information comprises timeslot allocation information for using wireless resources in at least two time windows, the at least two time windows comprise at least a third time window and a fourth time window, and the fourth time window lags behind the third time window;
a quantity of timeslots occupied by the first station in each time window of the at least two time windows, or of the second time window and the at least two time windows, is larger than a quantity of timeslots occupied by the second station in each time window; and
a time domain position of the first station in the third time window corresponds to a time domain position of the first station in the fourth time window, and a time domain position of the second station in the third time window corresponds to a time domain position of the second station in the fourth time window.

5. The method according to claim 1, wherein the determining whether the at least one group of target schedule arrangement information meeting the specified condition exists in the plurality of pieces of schedule arrangement information, comprises:
sorting the plurality of pieces of schedule arrangement information in the first arrangement table by station addresses of receiving stations corresponding to the timeslots, to obtain a second arrangement table;
determining a first piece of schedule arrangement information on which no merger decision is performed in the current second arrangement table, performing a merger decision on the first piece of schedule arrangement information, and determining whether a to-be-merged piece of schedule arrangement information meeting the specified condition exists in other pieces of schedule arrangement information after the first piece of schedule arrangement information;
when determining that the to-be-merged piece of schedule arrangement information exists, removing, from the second arrangement table, the first piece of schedule arrangement information and the to-be-merged piece of schedule arrangement information as a group of target schedule arrangement information; and
repeating the foregoing steps until only one first piece of schedule arrangement information or no first piece of schedule arrangement information on which no merger decision is performed exists in the current second arrangement table.

6. The method according to claim 5, wherein the performing the merger decision on the first piece of schedule arrangement information, and determining whether the to-be-merged piece of schedule arrangement information meeting the specified condition exists in the other pieces of schedule arrangement information after the first piece of schedule arrangement information, comprises:
sequentially comparing the first piece of schedule arrangement information with the other piece of schedule arrangement information after the first piece of schedule arrangement information, and when a first piece of target other schedule arrangement information meeting the specified condition is determined from the other piece of schedule arrangement information, determining that the to-be-merged piece of schedule arrangement information meeting the specified condition exists in the other pieces of schedule arrangement information; or
separately comparing the first piece of schedule arrangement information with the other pieces of schedule arrangement information after the first piece of schedule arrangement information, and when at least one piece of target other schedule arrangement information meeting the specified condition is determined from the other pieces of schedule arrangement information, determining that the to-be-merged piece of schedule arrangement information meeting the specified condition exists in the other pieces of schedule arrangement information.

7. The method according to claim 6, wherein the meeting the specified condition is:
a receiving station in the other pieces of schedule arrangement information is different from a receiving station in the first piece of schedule arrangement information, and a sending station in the one of the other pieces of schedule arrangement information is not a neighboring station of the receiving station in the first piece of schedule arrangement information; or
a receiving station in the other pieces of schedule arrangement information is different from a receiving station in the first piece of schedule arrangement information, and a sending station in one of the other pieces of schedule arrangement information is a neighboring station of the receiving station in the first piece of schedule arrangement information, and signal strength of the neighboring station is not higher than a specified threshold.

8. The method according to claim 1, wherein the re-allocating the timeslots based on the result of merging each group of target schedule arrangement information, to obtain the first timeslot allocation information, comprises:
re-allocating timeslots for the plurality of pieces of schedule arrangement information based on a time sequence of timeslots corresponding to each merged group of target schedule arrangement information and timeslots corresponding to unmerged pieces of schedule arrangement information, to obtain the first timeslot allocation information.

9. A wireless resource scheduling method, wherein the method comprises:
sending, by a first station, a first station state; wherein the first station state comprises a station state of the first station in a first time window;
sending, by the first station, station information, wherein the station information comprises a medium access control address of the first station and a medium access control address of an upper-level device associated with the first station;
sending, by the first station, nearby station information comprising medium access control addresses and signal strengths of nearby stations with respect to the first station;
receiving, by the first station, first timeslot allocation information from an access device, wherein the first timeslot allocation information comprises timeslot allocation information of the access device for each station for using a wireless resource in at least one time window, the first timeslot allocation information is obtained by the access device based on a network topology of the first station, the first station state and the nearby station information, and the network topology is obtained by the access device based on the station information which comprises: determining, based on the timeslot allocation information for each station for using the wireless resource in the at least one time window, a plurality of pieces of schedule arrangement information corresponding to each timeslot, wherein a piece of the schedule arrangement information comprises a receiving station and a sending station corresponding to a corresponding timeslot; sorting the plurality of pieces of obtained schedule arrangement information by timeslots in the timeslot allocation information, to obtain a first arrangement table; determining whether at least one group of pieces of target schedule arrangement information meeting a specified condition exists in the plurality of pieces of schedule arrangement information, wherein a group of target schedule arrangement information comprises at least two pieces of schedule arrangement information; merging, when the at least one group of pieces of target schedule arrangement information exists, timeslots for the at least two pieces of schedule arrangement information in each group of target schedule arrangement information; and re-allocating timeslots based on a result of merging each group of target schedule arrangement information, to obtain a first timeslot allocation information;
polling, by the first station, the first timeslot allocation information;
when determining that a station identifier corresponding to a current first timeslot is a station identifier of the first station, updating, by the first station, a current first priority for accessing a wireless medium service by the first station to a second priority, wherein the second priority is higher than the first priority; and
sending, by the first station, first data in the first timeslot by using the wireless resource.

10. The method according to claim 9, wherein after the polling, by the first station, the first timeslot allocation information, the method further comprises:
when determining that a station identifier corresponding to a current second timeslot is not the station identifier of the first station, updating, by the first station, the current second priority for accessing the wireless medium service by the first station to the first priority; and
sending, by the first station, second data in the second timeslot without using the wireless resource or by using the wireless resource, wherein a ratio of a size of the second data to a size of the first data is less than a preset value.

11. An access device, wherein the access device comprises:
a transceiver module, configured to obtain a first station state set, wherein the first station state set comprises station states of a plurality of stations in a first time window and obtain nearby station information comprising medium access control addresses and signal strengths of nearby stations with respect to each of the plurality of stations; and
a processing module, configured to determine networking topologies of the plurality of stations based on station information from the plurality of stations, wherein the station information comprises medium access control addresses of the plurality of stations and medium access control addresses of upper-level devices associated with the plurality of stations, and obtain, in a preset time window, first timeslot allocation information based on the networking topologies, the station states and the nearby station information, wherein the first timeslot allocation information comprises timeslot allocation information of the access device for each station for using a wireless resource in at least one time window, wherein the first time window, the preset time window and the at least one time window are different from each other; and
wherein the transceiver module is further configured to broadcast the first timeslot allocation information obtained by the processing module to each station;
the processing module is further configured to determine, based on the timeslot allocation information for each station for using the wireless resource in the at least one time window, a plurality of pieces of schedule arrangement information corresponding to each timeslot, wherein a piece of the schedule arrangement information comprises a receiving station and a sending station corresponding to a corresponding timeslot, and sort the plurality of pieces of obtained schedule arrangement information by timeslots in the timeslot allocation information, to obtain a first arrangement table, determine whether at least one group of pieces of target schedule arrangement information meeting a specified condition exists in the plurality of pieces of schedule arrangement information, wherein a group of target schedule arrangement information comprises at least two pieces of schedule arrangement information, and merge, when the at least one group of pieces of target schedule arrangement information exists, timeslots for the at least two pieces of schedule arrangement information in each group of target schedule arrangement information, and re-allocate timeslots based on a result of merging each group of target schedule arrangement information, to obtain a first timeslot allocation information.

12. A first station, wherein the first station comprises:
a transceiver module, configured to send a first station state, station information and nearby station information comprising medium access control addresses and signal strengths of nearby stations with respect to the first station, and receive first timeslot allocation information from an access device, wherein the first station state comprises a station state of the first station in a first time window; the first timeslot allocation information comprises timeslot allocation information of the access device for each station for using a wireless resource in at least one time window, the station information comprises a medium access control address of the first station and a medium access control address of an upper-level device associated with the first station, the first timeslot allocation information is obtained by the access device based on a network topology of the first station, the first station state and the nearby station information which comprises: determining, based on the timeslot allocation information for each station for using the wireless resource in the at least one time window, a plurality of pieces of schedule arrangement information corresponding to each timeslot, wherein a piece of the schedule arrangement information comprises a receiving station and a sending station corresponding to a corresponding timeslot; sorting the plurality of pieces of obtained schedule arrangement information by timeslots in the timeslot allocation information, to obtain a first arrangement table; determining whether at least one group of pieces of target schedule arrangement information meeting a specified condition exists in the plurality of pieces of schedule arrangement information, wherein a group of target schedule arrangement information comprises at least two pieces of schedule arrangement information; merging, when the at least one group of pieces of target schedule arrangement information exists, timeslots for the at least two pieces of schedule arrangement information in each group of target schedule arrangement information; and re-allocating timeslots based on a result of merging each group of target schedule arrangement information, to obtain a first timeslot allocation information, and the network topology is obtained by the access device based on the station information; and
a processing module, configured to: poll the first timeslot allocation information; and when determining that a station identifier corresponding to a current first timeslot is a station identifier of the first station, update a current first priority for accessing a wireless medium service by the first station to a second priority, wherein the second priority is higher than the first priority; and
wherein the transceiver module is further configured to send first data in the first timeslot by using the wireless resource.

13. A processing device, comprising a processor and a memory, wherein the memory stores a computer program, and when the processor invokes the computer program in the memory, the method according to any one of claims 1 to 8 is performed, or the method according to claim 9 or 10 is performed.

14. A computer-readable storage medium, wherein the computer-readable storage medium stores a plurality of instructions, and the instructions are suitable for being loaded by a processor to perform the method according to any one of claims 1 to 8, or perform the method according to claim 9 or 10.

## Patentansprüche

1. Verfahren zur Drahtlosressourcenplanung, umfassend:
Erhalten, durch eine Zugriffsvorrichtung, eines ersten Stationszustandssatzes, wobei der erste Stationszustandssatz Stationszustände einer Vielzahl von Stationen in einem ersten Zeitfenster umfasst;
Feststellen, durch die Zugriffsvorrichtung, von Netzwerktopologien der Vielzahl von Stationen auf Grundlage von Stationsinformationen von der Vielzahl von Stationen, wobei die Stationsinformationen Medienzugriffskontrolladressen der Vielzahl von Stationen und Medienzugriffskontrolladressen von übergeordneten Vorrichtungen, die mit der Vielzahl von Stationen verknüpft sind, umfassen;
Erhalten, durch die Zugriffsvorrichtung, von Informationen nahegelegener Stationen, die Medienzugriffskontrolladressen und Signalstärken nahegelegener Stationen in Bezug auf jede der Vielzahl von Stationen umfassen;
Erhalten, durch die Zugriffsvorrichtung in einem voreingestellten Zeitfenster, von ersten Zeitschlitzzuordnungsinformationen auf Grundlage der Netzwerktopologien, der Stationszustände und der Informationen nahegelegener Stationen, wobei die ersten Zeitschlitzzuordnungsinformationen Zeitschlitzzuordnungsinformationen der Zugriffsvorrichtung für jede Station zur Nutzung einer drahtlosen Ressource in mindestens einem Zeitfenster umfassen, wobei sich das erste Zeitfenster, das voreingestellte Zeitfenster und das mindestens eine Zeitfenster voneinander unterscheiden; und
Rundsenden, durch die Zugriffsvorrichtung, der ersten Zeitschlitzzuordnungsinformationen jeweils an die Stationen;
wobei das Erhalten, durch die Zugriffsvorrichtung, der ersten Zeitschlitzzuordnungsinformationen auf Grundlage der Netzwerktopologien, der Stationszustände und der Informationen nahegelegener Stationen umfasst:
Feststellen, auf Grundlage der Zeitschlitzzuordnungsinformationen für jede Station zur Nutzung der drahtlosen Ressource in dem mindestens einen Zeitfenster, einer Vielzahl von Planaufstellungsinformationen, wobei eine der Planaufstellungsinformationen eine Empfangsstation und eine Sendestation, die einem entsprechenden Zeitschlitz entsprechen, umfasst;
Sortieren der Vielzahl von erhaltenen Planaufstellungsinformationen nach Zeitschlitzen in den Zeitschlitzzuordnungsinformationen, um eine erste Aufstellungstabelle zu erhalten;
Feststellen, ob in der Vielzahl von Planaufstellungsinformationen mindestens eine Gruppe von Ziel-Planaufstellungsinformationen vorhanden ist, die eine angegebene Bedingung erfüllen, wobei eine Gruppe von Ziel-Planaufstellungsinformationen mindestens zwei Planaufstellungsinformationen umfasst;
Zusammenführen, wenn die mindestens eine Gruppe von Ziel-Planaufstellungsinformationen vorhanden ist, von Zeitschlitzen für die mindestens zwei Planaufstellungsinformationen in jeder Gruppe von Ziel-Planaufstellungsinformationen; und
Neuzuordnen von Zeitschlitzen auf Grundlage eines Ergebnisses des Zusammenführens jeder Gruppe von Ziel-Planaufstellungsinformationen, um erste Zeitschlitzzuordnungsinformationen zu erhalten.

2. Verfahren nach Anspruch 1, wobei das Erhalten, durch die Zugriffsvorrichtung, der ersten Zeitschlitzzuordnungsinformationen auf Grundlage der Netzwerktopologien, der Stationszustände und der Informationen nahegelegener Stationen umfasst:
Erhalten einer voreingestellten Zuordnungsbeziehung, wobei die voreingestellte Zuordnungsbeziehung eine Zuordnungsbeziehung zwischen einer Vielzahl von Zeitschlitzparametern, Zeitschlitzparameterwerten, die der Vielzahl von Zeitschlitzparametern entsprechen, und Beschreibungsinformationen der Zeitschlitzparameter umfasst; und
Erzeugen der ersten Zeitschlitzzuordnungsinformationen auf Grundlage der voreingestellten Zuordnungsbeziehung und der Stationszustände.

3. Verfahren nach Anspruch 1 oder 2, wobei ein Stationszustand jeder Station Echtzeitverkehr und eine aktuelle Priorität zum Zugreifen auf einen drahtlosen Mediendienst umfasst, und das Verfahren weiter umfasst:
Empfangen, durch die Zugriffsvorrichtung, eines zweiten Stationszustandssatzes von den Stationen, wobei der zweite Stationszustandssatz Stationszustände der Vielzahl von Stationen in einem zweiten Zeitfenster umfasst und eine Startzeit des zweiten Zeitfensters hinter einer Endzeit des ersten Zeitfensters zurückbleibt; und
Aktualisieren, durch die Zugriffsvorrichtung, einer Zeitschlitzgewichtung jeder Station in den ersten Zeitschlitzzuordnungsinformationen auf Grundlage des zweiten Stationszustandssatzes, wobei ein Wert der Zeitschlitzgewichtung in einer positiven Beziehung mit einer Priorität und/oder einem Übertragungsverkehr einer jeweiligen Station steht.

4. Verfahren nach Anspruch 3, wobei die Vielzahl von Stationen eine erste Station und eine zweite Station umfasst und eine Priorität der ersten Station höher ist als eine Priorität der zweiten Station;
die ersten Zeitschlitzzuordnungsinformationen Zeitschlitzzuordnungsinformationen für die Nutzung drahtloser Ressourcen in mindestens zwei Zeitfenstern umfassen, wobei die mindestens zwei Zeitfenster mindestens ein drittes Zeitfenster und ein viertes Zeitfenster umfassen und das vierte Zeitfenster hinter dem dritten Zeitfenster zurückbleibt;
eine Menge von durch die erste Station in jedem Zeitfenster von den mindestens zwei Zeitfenstern oder von dem zweiten Zeitfenster und den mindestens zwei Zeitfenstern belegten Zeitschlitzen größer ist als eine Menge von durch die zweite Station in jedem Zeitfenster belegten Zeitschlitzen; und
eine Zeitbereichsposition der ersten Station im dritten Zeitfenster einer Zeitbereichsposition der ersten Station im vierten Zeitfenster entspricht und eine Zeitbereichsposition der zweiten Station im dritten Zeitfenster einer Zeitbereichsposition der zweiten Station im vierten Zeitfenster entspricht.

5. Verfahren nach Anspruch 1, wobei das Feststellen, ob die mindestens eine Gruppe von Ziel-Planaufstellungsinformationen, die die angegebene Bedingung erfüllen, in der Vielzahl von Planaufstellungsinformationen vorhanden ist, umfasst:
Sortieren der Vielzahl von Planaufstellungsinformationen in der ersten Aufstellungstabelle nach Stationsadressen von Empfangsstationen, die den Zeitschlitzen entsprechen, um eine zweite Aufstellungstabelle zu erhalten;
Feststellen einer ersten Planaufstellungsinformation, an der in der aktuellen zweiten Aufstellungstabelle keine Zusammenführungsentscheidung durchgeführt wird, Durchführen einer Zusammenführungsentscheidung an der ersten Planaufstellungsinformation und Feststellen, ob in anderen von Planaufstellungsinformationen nach der von Planaufstellungsinformation eine zusammenzuführende Planaufstellungsinformation vorhanden ist, die die angegebene Bedingung erfüllt;
wenn festgestellt wird, dass die zusammenzuführende Planaufstellungsinformation vorhanden ist, Entfernen, aus der zweiten Aufstellungstabelle, der ersten Planaufstellungsinformation und der zusammenzuführenden Planaufstellungsinformation als eine Gruppe von Ziel-Planaufstellungsinformationen; und
Wiederholen der vorstehenden Schritte, bis in der aktuellen zweiten Aufstellungstabelle nur eine erste Aufstellungsinformation oder keine erste Aufstellungsinformation vorhanden ist, an der keine Zusammenführungsentscheidung durchgeführt wird.

6. Verfahren nach Anspruch 5, wobei das Durchführen der Zusammenführungsentscheidung an der ersten Planaufstellungsinformationen und Feststellen, ob die zusammenzuführende Planaufstellungsinformation, die die angegebene Bedingung erfüllen, in den anderen Planaufstellungsinformationen nach der ersten Planaufstellungsinformation vorhanden ist, umfasst:
aufeinanderfolgendes Vergleichen der ersten Planaufstellungsinformation mit der anderen Planaufstellungsinformation, und, wenn aus den anderen Planaufstellungsinformationen eine erste andere Ziel-Planaufstellungsinformation festgestellt wird, die die angegebene Bedingung erfüllt, Feststellen, dass die zusammenzuführende Planaufstellungsinformation, die die angegebene Bedingung erfüllt, in den anderen Planaufstellungsinformationen vorhanden ist; oder
gesondertes Vergleichen der ersten Planaufstellungsinformation mit den anderen Planaufstellungsinformationen nach der ersten Planaufstellungsinformation, und, wenn aus den anderen Planaufstellungsinformationen mindestens eine andere Ziel-Planaufstellungsinformationen festgestellt wird, die die angegebene Bedingung erfüllt, Feststellen, dass die zusammenzuführende Planaufstellungsinformation, die die angegebene Bedingung erfüllt, in den anderen Planaufstellungsinformationen vorhanden ist.

7. Verfahren nach Anspruch 6, wobei das Erfüllung der angegebenen Bedingung ist:
eine Empfangsstation in den anderen Planaufstellungsinformationen unterscheidet sich von einer Empfangsstation in der ersten Planaufstellungsinformation, und eine Sendestation in der einen von den anderen Planaufstellungsinformationen ist keine Nachbarstation der Empfangsstation in der ersten Planaufstellungsinformation; oder
eine Empfangsstation in den anderen Planaufstellungsinformationen unterscheidet sich von einer Empfangsstation in der ersten Planaufstellungsinformation, und eine Sendestation in einer von den anderen Planaufstellungsinformationen ist eine Nachbarstation der Empfangsstation in der ersten Planaufstellungsinformation, und die Signalstärke der Nachbarstation ist nicht höher als ein angegebener Schwellenwert.

8. Verfahren nach Anspruch 1, wobei das Neuzuordnen der Zeitschlitze auf Grundlage des Ergebnisses des Zusammenführens jeder Gruppe von Ziel-Planaufstellungsinformationen, um die ersten Zeitschlitzzuordnungsinformationen zu erhalten, umfasst:
Neuzuordnen von Zeitschlitzen für die Vielzahl von Planaufstellungsinformationen auf Grundlage einer zeitlichen Abfolge von Zeitschlitzen, die jeder zusammengeführten Gruppe von Ziel-Planaufstellungsinformationen entsprechen, und Zeitschlitzen, die nicht zusammengeführten Planaufstellungsinformationen entsprechen, um die ersten Zeitschlitzzuordnungsinformationen zu erhalten.

9. Verfahren zur Drahtlosressourcenplanung, wobei das Verfahren umfasst:
Senden, durch eine erste Station, eines ersten Stationszustands; wobei der erste Stationszustand einen Stationszustand der ersten Station in einem ersten Zeitfenster umfasst;
Senden, durch die erste Station, von Stationsinformationen, wobei die Stationsinformationen eine Medienzugriffskontrolladresse der ersten Station und eine Medienzugriffskontrolladresse einer übergeordneten Vorrichtung, die mit der ersten Station verknüpft ist, umfassen;
Senden, durch die erste Station, von Informationen nahegelegener Stationen, die Medienzugriffskontrolladressen und Signalstärken nahegelegener Stationen in Bezug auf die erste Station umfassen;
Empfangen, durch die erste Station, von ersten Zeitschlitzzuordnungsinformationen von einer Zugriffsvorrichtung, wobei die ersten Zeitschlitzzuordnungsinformationen Zeitschlitzzuordnungsinformationen der Zugriffsvorrichtung für jede Station zur Nutzung einer drahtlosen Ressource in mindestens einem Zeitfenster umfassen, die ersten Zeitschlitzzuordnungsinformationen durch die Zugriffsvorrichtung auf Grundlage einer Netzwerktopologie der ersten Station, des ersten Stationszustands und der Informationen nahegelegener Stationen erhalten werden und die Netzwerktopologie durch die Zugriffsvorrichtung auf Grundlage der Stationsinformationen erhalten wird, was umfasst: Ermitteln, auf Grundlage der Zeitschlitzzuordnungsinformationen für jede Station zur Nutzung der drahtlosen Ressource in dem mindestens einen Zeitfenster, einer Vielzahl von Planaufstellungsinformationen, die jedem Zeitschlitz entsprechen, wobei eine Planaufstellungsinformation eine Empfangsstation und eine Sendestation, die einem entsprechenden Zeitschlitz entsprechen, umfasst; Sortieren der Vielzahl von ermittelten Planaufstellungsinformationen nach Zeitschlitzen in den Zeitschlitzzuordnungsinformationen, um eine erste Aufstellungstabelle zu erhalten; Feststellen, ob in der Vielzahl von Planaufstellungsinformationen mindestens eine Gruppe von Ziel-Planaufstellungsinformationen vorhanden ist, die eine angegebene Bedingung erfüllt, wobei eine Gruppe von Ziel-Planaufstellungsinformationen mindestens zwei Planaufstellungsinformationen umfasst; Zusammenführen, wenn mindestens eine Gruppe von Ziel-Planaufstellungsinformationen vorhanden ist, der Zeitschlitze für die mindestens zwei Zeitschlitzinformationen in jeder Gruppe von Ziel-Planaufstellungsinformationen und Neuzuordnen der Zeitschlitze auf Grundlage eines Ergebnisses des Zusammenführens jeder Gruppe von Ziel-Planaufstellungsinformationen, um erste Zeitschlitzzuordnungsinformationen zu erhalten;
Abrufen, durch die erste Station, der ersten Zeitschlitzzuordnungsinformationen;
wenn festgestellt wird, dass eine Stationskennung, die einem aktuellen ersten Zeitschlitz entspricht, eine Stationskennung der ersten Station ist, Aktualisieren, durch die erste Station, einer aktuellen ersten Priorität zum Zugreifen auf einen drahtlosen Mediendienst durch die erste Station auf eine zweite Priorität, wobei die zweite Priorität höher ist als die erste Priorität; und
Senden, durch die erste Station, von ersten Daten im ersten Zeitschlitz durch Nutzung der drahtlosen Ressource.

10. Verfahren nach Anspruch 9, wobei nach dem Abrufen, durch die erste Station, der ersten Zeitschlitzzuordnungsinformationen das Verfahren weiter umfasst:
wenn festgestellt wird, dass eine Stationskennung, die einem aktuellen zweiten Zeitschlitz entspricht, nicht die Stationskennung der ersten Station ist, Aktualisieren, durch die erste Station, der aktuellen zweiten Priorität zum Zugreifen auf den drahtlosen Mediendienst durch die erste Station auf die erste Priorität; und
Senden, durch die erste Station, von zweiten Daten im zweiten Zeitschlitz ohne Nutzung der drahtlosen Ressource oder durch Nutzung der drahtlosen Ressource, wobei ein Verhältnis einer Größe der zweiten Daten zu einer Größe der ersten Daten kleiner ist als ein voreingestellter Wert.

11. Zugriffsvorrichtung, wobei die Zugriffsvorrichtung umfasst:
ein Sender-Empfänger-Modul, das dafür konfiguriert ist, einen ersten Stationszustandssatz zu erhalten, wobei der erste Stationszustandssatz die Stationszustände einer Vielzahl von Stationen in einem ersten Zeitfenster umfasst, und Informationen nahegelegener Stationen zu erhalten, die Medienzugriffskontrolladressen und Signalstärken nahegelegener Stationen in Bezug auf jede der Vielzahl von Stationen umfassen; und
ein Verarbeitungsmodul, das dafür konfiguriert ist, Netzwerktopologien der Vielzahl von Stationen auf Grundlage von Stationsinformationen der Vielzahl von Stationen festzustellen, wobei die Stationsinformationen Medienzugriffskontrolladressen der Vielzahl von Stationen und Medienzugriffskontrolladressen von übergeordneten Vorrichtungen, die mit der Vielzahl von Stationen verknüpft sind, umfassen, und in einem voreingestellten Zeitfenster, erste Zeitschlitzzuordnungsinformationen auf Grundlage der Netzwerktopologien, der Stationszustände und der Informationen naheliegender Stationen zu erhalten, wobei die ersten Zeitschlitzzuordnungsinformationen Zeitschlitzzuordnungsinformationen der Zugriffsvorrichtung für jede Station zur Nutzung einer drahtlosen Ressource in mindestens einem Zeitfenster umfassen, wobei sich das erste Zeitfenster, das voreingestellte Zeitfenster und das mindestens eine Zeitfenster voneinander unterscheiden; und
wobei das Sender-Empfänger-Modul weiter dafür konfiguriert ist, die vom Verarbeitungsmodul erhaltenen ersten Zeitschlitzzuordnungsinformationen an jede Station rundzusenden;
das Verarbeitungsmodul weiter dafür konfiguriert ist, auf Grundlage der Zeitschlitzzuordnungsinformationen für jede Station zur Nutzung der drahtlosen Ressource in dem mindestens einen Zeitfenster, eine Vielzahl von Planaufstellungsinformationen festzustellen, die jedem Zeitschlitz entsprechen, wobei eine Planaufstellungsinformation eine Empfangsstation und eine Sendestation, die einem entsprechenden Zeitschlitz entsprechen, umfasst, und die Vielzahl von festgestellten Planaufstellungsinformationen nach Zeitschlitzen zu sortieren, um eine erste Aufstellungstabelle zu erhalten, festzustellen, ob in der Vielzahl von Planaufstellungsinformationen mindestens eine Gruppe von Ziel-Planaufstellungsinformationen vorhanden ist, die eine angegebene Bedingung erfüllt, wobei eine Gruppe von Ziel-Planaufstellungsinformationen mindestens zwei Planaufstellungsinformationen umfasst, und, wenn die mindestens eine Gruppe von Ziel-Planaufstellungsinformationen vorhanden ist, Zeitschlitze für die mindestens zwei Planaufstellungsinformationen in jeder Gruppe von Ziel-Planaufstellungsinformationen zusammenzuführen und Zeitschlitze auf Grundlage eines Ergebnisses des Zusammenführens jeder Gruppe von Ziel-Planaufstellungsinformationen neu zuzuordnen, um erste Zeitschlitzzuordnungsinformationen zu erhalten.

12. Erste Station, wobei die erste Station umfasst:
ein Sender-Empfänger-Modul, das dafür konfiguriert ist, einen ersten Stationszustand, Stationsinformationen und Informationen nahegelegener Stationen, die Medienzugriffskontrolladressen und Signalstärken nahegelegener Stationen in Bezug auf die erste Station umfassen, zu senden und erste Zeitschlitzzuordnungsinformationen von einer Zugriffsvorrichtung zu empfangen, wobei der erste Stationszustand einen Stationszustand der ersten Station in einem ersten Zeitfenster umfasst; die ersten Zeitschlitzzuordnungsinformationen Zeitschlitzzuordnungsinformationen der Zugriffsvorrichtung für jede Station zur Nutzung einer drahtlosen Ressource in mindestens einem Zeitfenster umfassen, die Stationsinformationen eine Medienzugriffskontrolladresse der ersten Station und eine Medienzugriffskontrolladresse einer übergeordneten Vorrichtung, das mit der ersten Station verknüpft ist, umfassen, die ersten Zeitschlitzzuordnungsinformationen durch die Zugriffsvorrichtung auf Grundlage einer Netzwerktopologie der ersten Station, des ersten Stationszustands und der Informationen nahegelegener Stationen festgestellt werden, was umfasst: Feststellen, auf Grundlage der Zeitschlitzzuordnungsinformationen für jede Station zur Nutzung der drahtlosen Ressource in dem mindestens einen Zeitfenster, einer Vielzahl von Planaufstellungsinformationen, die jedem Zeitschlitz entsprechen, wobei eine Planaufstellungsinformation eine Empfangsstation und eine Sendestation, die einem entsprechenden Zeitschlitz entsprechen umfasst; Sortieren der Vielzahl von erhaltenen Planaufstellungsinformationen nach Zeitschlitzen in den Zeitschlitzzuordnungsinformationen, um eine erste Aufstellungstabelle zu erhalten; Feststellen, ob in der Vielzahl von Planaufstellungsinformationen mindestens eine Gruppe von Ziel-Planaufstellungsinformationen vorhanden ist, die eine angegebene Bedingung erfüllt, wobei eine Gruppe von Ziel-Planaufstellungsinformationen mindestens zwei Planaufstellungsinformationen umfasst; Zusammenführen, wenn mindestens eine Gruppe von Ziel-Planaufstellungsinformationen vorhanden ist, von Zeitschlitzen für die mindestens zwei Planaufstellungsinformationen in jeder Gruppe von Ziel-Planaufstellungsinformationen und Neuzuordnen von Zeitschlitzen auf Grundlage eines Ergebnisses des Zusammenführens jeder Gruppe von Ziel-Planaufstellungsinformationen, um erste Zeitschlitzzuordnungsinformationen zu erhalten, und die Netzwerktopologie durch die Zugriffsvorrichtung auf Grundlage der Stationsinformationen erhalten wird; und
ein Verarbeitungsmodul, das zu Folgendem konfiguriert ist: die ersten Zeitschlitzzuordnungsinformationen abzurufen; und wenn festgestellt wird, dass eine Stationskennung, die einem aktuellen ersten Zeitschlitz entspricht, die Stationskennung der ersten Station ist, eine aktuelle erste Priorität zum Zugreifen auf einen drahtlosen Mediendienst durch die erste Station auf eine zweite Priorität zu aktualisieren, wobei die zweite Priorität höher ist als die erste Priorität; und
wobei das Sender-Empfänger-Modul weiter dafür konfiguriert ist, ersten Daten im ersten Zeitschlitz durch Nutzung der drahtlosen Ressource zu senden.

13. Verarbeitungsvorrichtung, die einen Prozessor und einen Speicher umfasst, wobei der Speicher ein Computerprogramm speichert, und, wenn der Prozessor das Computerprogramm in dem Speicher aufruft, das Verfahren nach einem der Ansprüche 1 bis 8 durchgeführt wird oder das Verfahren nach Anspruch 9 oder 10 durchgeführt wird.

14. Computerlesbares Speichermedium, wobei das computerlesbare Speichermedium eine Vielzahl von Anweisungen speichert und die Anweisungen geeignet sind, durch einen Prozessor geladen zu werden, um das Verfahren nach einem der Ansprüche 1 bis 8 durchzuführen oder das Verfahren nach Anspruch 9 oder 10 durchzuführen.

## Revendications

1. Procédé d'ordonnancement de ressources sans fil, comprenant :
l'obtention, par l'intermédiaire d'un dispositif d'accès, d'un premier ensemble d'états de station, dans lequel le premier ensemble d'états de station comprend des états de station d'une pluralité de stations dans une première fenêtre temporelle ;
la détermination, par l'intermédiaire du dispositif d'accès, des topologies de réseau de la pluralité de stations sur la base d'informations de station provenant de la pluralité de stations, dans lequel les informations de station comprennent des adresses de contrôle d'accès au support de la pluralité de stations et des adresses de contrôle d'accès au support de dispositifs de niveau supérieur associés à la pluralité de stations ;
l'obtention, par l'intermédiaire du dispositif d'accès, des informations de stations voisines comprenant les adresses de contrôle d'accès au support et des forces de signal de stations voisines par rapport à chacune de la pluralité de stations ;
l'obtention, par l'intermédiaire du dispositif d'accès dans une fenêtre temporelle prédéfinie, des premières informations d'attribution de créneau temporel sur la base des topologies de réseau, des états de station et des informations de stations voisines, dans lequel les premières informations d'attribution de créneau temporel comprennent des informations d'attribution de créneau temporel du dispositif d'accès pour chaque station pour utiliser une ressource sans fil dans au moins une fenêtre temporelle, dans lequel la première fenêtre temporelle, la fenêtre temporelle prédéfinie et la au moins une fenêtre temporelle sont différentes les unes des autres ;
la diffusion, par l'intermédiaire du dispositif d'accès, des premières informations d'attribution de créneau temporel aux stations, respectivement ;
dans lequel l'obtention, par l'intermédiaire du dispositif d'accès, des premières informations d'attribution de créneau temporel sur la base des topologies de réseau, des états de station et des informations de stations voisines, comprend :
la détermination, sur la base des informations d'attribution de créneau temporel pour chaque station pour utiliser la ressource sans fil dans au moins une fenêtre temporelle, d'une pluralité d'éléments d'informations d'agencement d'ordonnancement correspondant à chaque créneau temporel, dans lequel un élément des informations d'agencement d'ordonnancement comprend une station de réception et une station d'envoi correspondant à un créneau temporel correspondant ;
le triage de la pluralité d'éléments d'informations d'agencement d'ordonnancement obtenus par créneaux temporels dans les informations d'attribution de créneau temporel, afin d'obtenir un premier tableau d'agencement ;
la détermination si au moins un groupe d'éléments d'informations d'agencement d'ordonnancement cible répondant à une condition spécifiée existe dans la pluralité d'éléments d'informations d'agencement d'ordonnancement, dans lequel un groupe d'informations d'agencement d'ordonnancement cible comprend au moins deux éléments d'informations d'agencement d'ordonnancement ;
le fusionnement, lorsque le au moins un groupe d'informations d'agencement d'ordonnancement cible existe, de créneaux temporels pour les au moins deux éléments d'informations d'agencement d'ordonnancement dans chaque groupe d'informations d'agencement d'ordonnancement cible ; et
la réattribution de créneaux temporels sur la base d'un résultat de fusion de chaque groupe d'informations d'agencement d'ordonnancement cible, afin d'obtenir des premières informations d'attribution de créneau temporel.

2. Procédé selon la revendication 1, dans lequel l'obtention, par l'intermédiaire du dispositif d'accès, des premières informations d'attribution de créneau temporel sur la base des topologies de réseau, des états de station et des informations de stations voisines, comprend :
l'obtention d'une relation de mise en correspondance prédéfinie, dans lequel la relation de mise en correspondance prédéfinie comprend une relation de mise en correspondance entre une pluralité de paramètres de créneau temporel, de valeurs de paramètre de créneau temporel correspondant à la pluralité de paramètres de créneau temporel et des informations descriptives des paramètres de créneau temporel ; et
la génération des premières informations d'attribution de créneau temporel sur la base de la relation de mise en correspondance prédéfinie et des états de station.

3. Procédé selon la revendication 1 ou 2, dans lequel un état de chaque station comprend le trafic en temps réel et une priorité actuelle d'accès à un service de support sans fil, et le procédé comprend en outre :
la réception, par l'intermédiaire du dispositif d'accès, d'un second ensemble d'états de station provenant des stations, dans lequel le second ensemble d'états de station comprend des états de station de la pluralité de stations dans une deuxième fenêtre temporelle, et un instant de début de la deuxième fenêtre temporelle est postérieure à un instant de fin de la première fenêtre temporelle ; et
la mise à jour, par l'intermédiaire du dispositif d'accès, d'un poids de créneau temporel de chaque station dans les premières informations d'attribution de créneau temporel sur la base du deuxième ensemble d'états de station, dans lequel une valeur du poids de créneau temporel est dans une relation positive avec une priorité et/ou un trafic de transmission d'une station respective.

4. Procédé selon la revendication 3, dans lequel la pluralité de stations comprend une première station et une seconde station, et une priorité de la première station est supérieure à une priorité de la seconde station ;
les premières informations d'attribution de créneau temporel comprennent des informations d'attribution de créneau temporel pour utiliser des ressources sans fil dans au moins deux fenêtres temporelles, les au moins deux fenêtres temporelles comprennent au moins une troisième fenêtre temporelle et une quatrième fenêtre temporelle, et la quatrième fenêtre temporelle est postérieure par rapport à la troisième fenêtre temporelle ;
un nombre de créneaux temporels occupés par la première station dans chaque fenêtre temporelle des au moins deux fenêtres temporelles, ou de la deuxième fenêtre temporelle et des au moins deux fenêtres temporelles, est supérieur au nombre de créneaux temporels occupés par la seconde station dans chaque fenêtre temporelle ; et
une position de domaine temporel de la première station dans la troisième fenêtre temporelle correspond à une position de domaine temporel de la première station dans la quatrième fenêtre temporelle, et une position de domaine temporel de la seconde station dans la troisième fenêtre temporelle correspond à une position de domaine temporel de la seconde station dans la quatrième fenêtre temporelle.

5. Procédé selon la revendication 1, dans lequel la détermination de l'existence ou non, parmi la pluralité d'éléments d'informations d'agencement d'ordonnancement, du au moins un groupe d'informations d'agencement d'ordonnancement cible répondant à la condition spécifiée, comprend :
le triage de la pluralité d'éléments d'information d'agencement d'ordonnancement dans le premier tableau d'agencement par adresses de station de stations de réception correspondant aux créneaux temporels, pour obtenir un second tableau d'ordonnancement ;
la détermination d'un premier élément d'informations d'agencement d'ordonnancement sur lequel aucune décision de fusion n'est prise dans le second tableau d'agencement d'ordonnancement actuel, la prise d'une décision de fusion sur le premier élément d'informations d'agencement d'ordonnancement et la détermination si un élément d'information d'agencement d'ordonnancement à fusionner répondant à la condition spécifiée existe dans d'autres éléments d'informations d'agencement d'ordonnancement après le premier élément d'informations d'agencement d'ordonnancement ;
lorsqu'il est déterminé que l'élément d'informations d'agencement d'ordonnancement à fusionner existe, la suppression, du second tableau d'agencement, du premier élément d'informations d'agencement d'ordonnancement et de l'élément d'informations d'agencement d'ordonnancement à fusionner en tant que groupe d'informations d'agencement d'ordonnancement cible ; et
la répétition des étapes précédentes jusqu'à ce qu'il n'existe dans le second tableau d'agencement actuel qu'un seul premier élément d'informations d'agencement d'ordonnancement ou aucun premier élément d'informations d'agencement d'ordonnancement sur lequel aucune décision de fusion n'est prise.

6. Procédé selon la revendication 5, dans lequel la prise de décision de fusion sur le premier élément d'informations d'agencement d'ordonnancement, et la détermination de l'existence ou non, dans les autres éléments d'informations d'agencement d'ordonnancement postérieures au premier élément d'information d'agencement d'ordonnancement à fusionner répondant à la condition spécifiée, comprend :
la comparaison séquentielle du premier élément d'informations d'agencement d'ordonnancement avec l'autre élément d'informations d'agencement d'ordonnancement postérieur au premier élément d'informations d'agencement d'ordonnancement, et lorsqu'un premier élément d'information d'agencement d'ordonnancement cible répondant à la condition spécifiée est déterminée à partir de l'autre élément d'informations d'agencement d'ordonnancement, la détermination que l'élément d'informations d'agencement d'ordonnancement à fusionner répondant à la condition spécifiée existe dans les autres éléments d'informations d'agencement d'ordonnancement ; ou
la comparaison séquentielle du premier élément d'informations d'agencement d'ordonnancement avec les autres éléments d'informations d'agencement d'ordonnancement postérieur au premier élément d'informations d'agencement d'ordonnancement, et lorsqu'au moins un premier élément d'information d'agencement d'ordonnancement cible répondant à la condition spécifiée est déterminée à partir des autres éléments d'informations d'agencement d'ordonnancement, la détermination que l'élément d'informations d'agencement d'ordonnancement à fusionner répondant à la condition spécifiée existe dans les autres éléments d'informations d'agencement d'ordonnancement.

7. Procédé selon la revendication 6, dans lequel la satisfaction de la condition spécifiée est :
une station de réception dans les autres éléments d'informations d'agencement d'ordonnancement est différente d'une station de réception dans le premier élément d'informations d'agencement d'ordonnancement, et une station d'envoi dans le certain des autres éléments d'informations d'agencement d'ordonnancement n'est pas une station voisine de la station de réception dans le premier élément d'informations d'agencement d'ordonnancement ; ou
une station de réception dans les autres éléments d'informations d'agencement d'ordonnancement est différente d'une station de réception dans le premier élément d'informations d'agencement d'ordonnancement, et une station d'envoi dans un certain des autres éléments d'informations d'agencement d'ordonnancement n'est pas une station voisine de la station de réception dans le premier élément d'informations d'agencement d'ordonnancement, et la force de signal de la station voisine n'est pas supérieure à un seuil spécifié.

8. Procédé selon la revendication 1, dans lequel la réattribution des créneaux temporels sur la base du résultat de la fusion de chaque groupe d'informations d'agencement d'ordonnancement cible, afin d'obtenir les premières informations d'attribution de créneau temporel, comprend :
la réattribution de créneaux temporels pour la pluralité d'éléments d'information d'agencement d'ordonnancement sur la base d'une séquence temporelle de créneaux temporels correspondant à chaque groupe fusionné d'informations d'agencement d'ordonnancement cible et de créneaux temporels correspondant à des éléments non fusionnés d'informations d'agencement d'ordonnancement, afin d'obtenir les premières informations d'attribution de créneau temporel.

9. Procédé d'ordonnancement de ressources sans fil, dans lequel le procédé comprend :
l'envoi, par l'intermédiaire d'une première station, d'un premier état de station ; dans lequel le premier état de station comprend un état de station de la première station dans une première fenêtre temporelle ;
l'envoi, par l'intermédiaire de la première station, d'informations de station, dans lequel les informations de station comprennent une adresse de contrôle d'accès au support de la première station et une adresse de contrôle d'accès au support d'un dispositif de niveau supérieur associé à la première station ;
l'envoi, par l'intermédiaire de la première station, d'informations de stations voisines comprenant des adresses de contrôle d'accès au support et les forces de signal de stations voisines par rapport à la première station ;
la réception, par l'intermédiaire de la première station, de premières informations d'attribution de créneau temporel à partir d'un dispositif d'accès, dans lequel les premières informations d'attribution de créneau temporel comprennent des informations d'attribution de créneau temporel du dispositif d'accès pour chaque station pour utiliser une ressource sans fil dans au moins une fenêtre temporelle, les premières informations d'attribution de créneau temporel sont obtenues par le dispositif d'accès sur la base d'une topologie de réseau de la première station, de l'état de première station et des informations de stations voisines, et la topologie de réseau est obtenue par le dispositif d'accès sur la base des informations de station, ce qui comprend : la détermination, sur la base des informations d'attribution de créneau temporel pour chaque station pour utiliser la ressource sans fil dans au moins une fenêtre temporelle, d'une pluralité d'éléments d' informations d'agencement d'ordonnancement correspondant à chaque créneau temporel, dans lequel un élément d'informations d'agencement d'ordonnancement comprend une station de réception et une station d'envoi correspondant à un créneau temporel correspondant ; le triage de la pluralité d'éléments d'informations d'agencement d'ordonnancement obtenues par créneaux temporels afin d'obtenir une première table d'agencement ; la détermination de l'existence ou non d'au moins un groupe d'éléments d'informations d'agencement d'ordonnancement cible répondant à une condition spécifiée dans la pluralité d'éléments d'informations d'agencement d'ordonnancement, dans lequel un groupe d'informations d'agencement d'ordonnancement cible comprend au moins deux éléments d'informations d'agencement d'ordonnancement ; le fusionnement, lorsque le au moins un groupe d'éléments d'informations d'agencement d'ordonnancement cible existe, de créneaux temporels pour les au moins deux éléments d'informations d'agencement d'ordonnancement dans chaque groupe d'informations d'agencement d'ordonnancement cible ; et la réattribution de créneaux temporels sur la base d'un résultat de fusion de chaque groupe d'informations d'agencement d'ordonnancement cible, afin d'obtenir des premières informations d'attribution de créneau temporel ;
l'interrogation, par l'intermédiaire de la première station, des premières informations d'attribution de créneau temporel ;
lors de la détermination qu'un identifiant de station correspondant à un premier créneau temporel actuel est un identifiant de station de la première station, la mise à jour, par l'intermédiaire de la première station, d'une première priorité actuelle d'accès à un service de support sans fil par la première station à une seconde priorité, dans lequel la seconde priorité est supérieure à la première priorité ; et
l'envoi, par l'intermédiaire de la première station, de premières données dans le premier créneau temporel en utilisant la ressource sans fil.

10. Procédé selon la revendication 9, dans lequel, après l'interrogation, par l'intermédiaire de la première station, des premières informations d'attribution de créneau temporel, le procédé comprend en outre :
lorsqu'il est déterminé qu'un identifiant de station correspondant à un second créneau temporel actuel n'est pas l'identifiant de station de la première station, la mise à jour, par l'intermédiaire de la première station, de la seconde priorité actuelle d'accès au service de support sans fil par la première station à la première priorité ; et
l'envoi, par l'intermédiaire de la première station, de secondes données dans le second créneau temporel sans utiliser la ressource sans fil ou en utilisant la ressource sans fil, dans lequel un rapport entre une taille des secondes données et une taille des premières données est inférieur à une valeur prédéfinie.

11. Dispositif d'accès, dans lequel ledit dispositif d'accès comprend :
un module émetteur-récepteur, configuré pour obtenir un premier ensemble d'états de station, dans lequel le premier ensemble d'états de station comprend des états de station d'une pluralité de stations dans une première fenêtre temporelle, et obtenir des informations de stations voisines comprenant les adresses de contrôle d'accès au support et des forces de signal des stations voisines par rapport à chacune de la pluralité de stations ; et
un module de traitement, configuré pour déterminer des topologies de réseau de la pluralité stations sur la base d'informations de station provenant de la pluralité de stations, dans lequel les informations de station comprennent des adresses de contrôle d'accès au support de la pluralité de stations et des adresses de contrôle d'accès au support de dispositifs de niveau supérieur associés à la pluralité de station ; et obtenir, dans une fenêtre temporelle prédéfinie, des premières informations d'attribution de créneau temporel sur la base des topologies de réseau, des états de station et des informations de stations voisines, dans lequel les premières informations d'attribution de créneau temporel comprennent des informations d'attribution de créneau temporel du dispositif d'accès pour chaque station pour utiliser une ressource sans fil dans au moins une fenêtre temporelle, dans lequel la première fenêtre temporelle, la fenêtre temporelle prédéfinie et la au moins une fenêtre temporelle sont différentes les unes des autres ; et
dans lequel le module émetteur-récepteur est en outre configuré pour diffuser à chaque station les premières informations d'attribution de créneau temporel obtenues par le module de traitement ;
le module de traitement est en outre configuré pour déterminer, sur la base des informations d'attribution de créneau temporel pour chaque station pour utiliser la ressource sans fil dans la au moins une fenêtre temporelle, une pluralité d'éléments d'informations d'ordonnancement correspondant à chaque créneau temporel, dans lequel un élément des informations d'agencement d'ordonnancement comprend une station de réception et une station d'envoi correspondant à un créneau temporel correspondant, et trier la pluralité d'éléments d'informations d'agencement d'ordonnancement obtenues par créneaux temporels dans les informations d'attribution de créneau temporel afin d'obtenir une première table d'agencement, déterminer l'existence ou non d'au moins un groupe d'éléments d'informations d'agencement d'ordonnancement cible répondant à une condition spécifiée dans la pluralité d'éléments d'informations d'agencement d'ordonnancement, dans lequel un groupe d'informations d'agencement d'ordonnancement cible comprend au moins deux éléments d'informations d'agencement d'ordonnancement, et fusionner, lorsque le au moins un groupe d'éléments d'informations d'agencement d'ordonnancement cible existe, des créneaux temporels pour les au moins deux éléments d'informations d'agencement d'ordonnancement dans chaque groupe d'informations d'agencement d'ordonnancement cible, et réattribuer des créneaux temporels sur la base d'un résultat de fusion de chaque groupe d'informations d'agencement d'ordonnancement cible, afin d'obtenir des premières informations d'attribution de créneau temporel ;

12. Première station, dans laquelle la première station comprend :
un module émetteur-récepteur, configuré pour envoyer un premier état de station, des informations de station et des informations de stations voisines comprenant des adresses de contrôle d'accès au support et des forces de signal de stations voisines par rapport à la première station, et pour recevoir des premières informations d'attribution de créneau temporel depuis un dispositif d'accès, dans lequel l'état de première station comprend un état de station de la première station dans une première fenêtre temporelle ; les premières informations d'attribution de créneau temporel comprennent des informations d'attribution de créneau temporel du dispositif d'accès pour chaque station pour utiliser une ressource sans fil dans au moins une fenêtre temporelle, les informations de station comprennent une adresse de contrôle d'accès au support de la première station et une adresse de contrôle d'accès au support d'un dispositif de niveau supérieur associé à la première station, les premières informations d'attribution de créneau temporel sont obtenues par le dispositif d'accès sur la base d'une topologie de réseau de la première station, de l'état de première station et des informations de stations voisines, ce qui comprend : déterminer, sur la base des informations d'attribution de créneau temporel pour chaque station pour utiliser la ressource sans fil dans au moins une fenêtre temporelle, une pluralité d'éléments d' informations d'agencement d'ordonnancement correspondant à chaque créneau temporel, dans lequel un élément d'informations d'agencement d'ordonnancement comprend une station de réception et une station d'envoi correspondant à un créneau temporel correspondant ; trier la pluralité d'éléments d'informations d'agencement d'ordonnancement obtenues par créneaux temporels afin d'obtenir une première table d'agencement ; déterminer l'existence ou non d'au moins un groupe d'éléments d'informations d'agencement d'ordonnancement cible répondant à une condition spécifiée dans la pluralité d'éléments d'informations d'agencement d'ordonnancement, dans lequel un groupe d'informations d'agencement d'ordonnancement cible comprend au moins deux éléments d'informations d'agencement d'ordonnancement ; fusionner, lorsque le au moins un groupe d'éléments d'informations d'agencement d'ordonnancement cible existe, des créneaux temporels pour les au moins deux éléments d'informations d'agencement d'ordonnancement dans chaque groupe d'informations d'agencement d'ordonnancement cible ; et réattribuer des créneaux temporels sur la base d'un résultat de fusion de chaque groupe d'informations d'agencement d'ordonnancement cible, afin d'obtenir des premières informations d'attribution de créneau temporel, et la topologie de réseau est obtenue par le dispositif d'accès sur la base des informations de station ; et
un module de traitement, configuré pour : interroger les premières informations d'attribution de créneau temporel ; et, lors de la détermination qu'un identifiant de station correspondant à un premier créneau temporel actuel est un identifiant de station de la première station, mettre à jour une première priorité actuelle d'accès à un service de support sans fil par la première station en une seconde priorité, dans lequel la seconde priorité est supérieure à la première priorité ; et
dans lequel le module émetteur-récepteur est en outre configuré pour envoyer des premières données dans le premier créneau temporel en utilisant la ressource sans fil.

13. Dispositif de traitement comprenant un processeur et une mémoire, dans lequel la mémoire stocke un programme informatique, et lorsque le processeur invoque le programme informatique dans la mémoire, le procédé selon l'une quelconque des revendications 1 à 8 est exécuté, ou le procédé selon la revendication 9 ou 10 est exécuté.

14. Support de stockage lisible par ordinateur, dans lequel le support de stockage lisible par ordinateur stocke une pluralité d'instructions, et les instructions sont adaptées pour être chargées par un processeur pour exécuter le procédé selon l'une quelconque des revendications 1 à 8, ou exécuter le procédé selon la revendication 9 ou 10.
